# EUROPEAN PATENT SPECIFICATION

(11) **EP 0 242 144 B1**
(45) Date of publication and mention of the grant of the patent: **04.08.1993**
(21) Application number: 87303169.4
(22) Date of filing: 10.04.1987
(51) Int. Cl.: G11B 15/68

(54) **Cassette or cartridge auto-changers**
Automatischer Kassettenwechsler
Changeur automatique de cassettes

(30) Priority: 12.04.1986 JP 84674/86
(43) Date of publication of application: 21.10.1987
(60) Divisional application: 91121621.6
(73) Proprietor: SONY CORPORATION, Tokyo 141 (JP)
(72) Inventor: Nonaka, Wataru, Shinagawa-ku Tokyo 141 (JP); Hirata, Eiichi, Shinagawa-ku Tokyo 141 (JP)
(74) Representative: Thomas, Christopher Hugo

(56) References cited:
- EP-A- 0 091 058
- EP-A- 0 241 189
- WO-A-87/06215
- US-A- 3 268 097
- US-A- 3 536 194
- US-A- 3 646 258
- US-A- 3 690 479

## Description

This invention relates to cassette or cartridge auto-changers, and more particularly, but not exclusively, to video cassette auto-changers.

A video cassette auto-changer has been provided, for example, for use by broadcasting stations, so that a large number of video tape cassettes can be automatically selectively loaded in sequence into a plurality of video tape recorders (VTRs) so as to permit continuous video reproducing and/or recording for an extended time. In a known video cassette auto-changer, a large number of cassette storage bins are arrayed vertically and horizontally in an arrangement of stacks thereof, with a plurality of VTRs disposed at one end of the stack arrangement, and with a cassette transporting device for selectively transporting cassettes between the storage bins and the VTRs. Having in mind the relatively large dimensions of the stack arrangement in orthogonally related directions, for example, in vertical and horizontal directions, the cassette transporting device may comprise a carriage arranged to receive a cassette from, and to discharge a cassette into a selected one of the storage bins or VTRs with which the carriage is registered, a movable guide rail extending in one of the orthogonally related directions, for example, vertically and having a length at least as large as the height of the stack arrangement, with the carriage being mounted for vertical movements along the movable guide rail, and fixed guide rails extending in the other orthogonally related direction, that is, horizontally at the top and bottom of the stack arrangement along the length thereof, with sliders being movable along the fixed guide rails and attached to the ends of the movable guide rail. By effecting movements of the sliders along the fixed guide rails and of the carriage along the movable guide rail, the carriage can be brought into selective registry with the various cassette storage bins or VTRs. However, by reason of the relatively large space occupied by the stack arrangement, it is at least difficult and costly, and in some instances even impossible, to achieve precise parallel alignment of the upper and lower fixed guide rails, with the result that the sliders, when rigidly connected to the ends of the movable guide rail for movably mounting the sliders on the fixed guide rails, may jam relative to the latter.

Moreover, in the above-described video cassette auto-changer, it is necessary to transmit electrical control signals over large distances, for example, to the carriage as it is moved over relatively large vertical and horizontal distances for selectively registering with any one of the large number of cassette storage bins or the plurality of VTRs. For this purpose, it has been proposed to employ an elastically coiled electrical cord for transmitting the electrical control or driving signals to the movable carriage, with the intention that the cord will be automatically extended and contracted in accordance with movements of the carriage away from and towards a fixed terminal or socket from which the cord extends. Alternatively, it has been proposed to use a flat, flexibly resilient cable as the electrical connecting member, and to increase the inherent resiliency of the cable by mounting a leaf spring therealong as a guide member to prevent entangling of the cable in adjacent structures during movement of the carriage. As still another possible arrangement of the electrical connecting member, it has been proposed to employ therefor a cable inserted, for at least part of its length, in a resiliently flexible tube which tends to keep the cable straight, but which can be resiliently bent up to approximately a 180^{o} turn for accommodating movements of the carriage.

However, all these schemes for controlling and preventing snagging of the electrical connecting member have disadvantages. When an elastically coiled electric cord is used, the maximum length of the extended cord is about three times its minimum or contracted length. Thus, the cord, even when fully contracted, takes up more space than is desired. Similarly, when a flat, flexibly resilient cable is employed either alone or with a leaf spring to increase its resiliency, or when the cable is inserted in a resilient tube, undesirably large spaces are required for such arrangements, particularly when large movements of the carriage are to be effected and sharp bends in the cable are to be avoided.

Patent Specification EP-A-0 091 058 discloses apparatus for moving articles such as cassettes to and from storage bins, the apparatus having an upright support column movable laterally on upper and lower guide rails and having a carriage vertically movable therealong, the carriage having transport means thereon whereby a cassette can be moved thereonto from a storage bin into alignment with which the carriage has been brought.

Patent Specification EP-A-2 418 189 which was filed on an application having an earlier priority date than this application but which was not published before the priority date of this application discloses an arrangement similar to that of EP-A-0-091 058 but including trunnions provided at upper and lower ends of the support column and pivotally connecting the support column to sliders mounted on the upper and lower guide rails. Fixed motors driving winding drums for cables control movement of the support column along the upper and lower guide rails and of the carriage up and down the support column.

According to the present invention there is provided an apparatus for selectively supplying and reproducing cassettes or cartridges and which includes a plurality of reproducing and/or recording means, a plurality of cassette or cartridge storage bins arrayed in first and second orthogonally related directions and each able to store a cassette or cartridge therein, and transporting means for selectively transporting said cassettes or cartridges between said storage bins and between said storage bins and said reproducing and/or recording means;
said transporting means comprising:
fixed guide rail means extending in said first direction;
slider means mounted on said fixed guide rail means for movement therealong in said first direction;
slider driving means for driving said slider means along said fixed guide rail means; said fixed guide rail means including first and second parallel, spaced apart fixed guide rails extending in said first direction, said slider means including first and second slider members movable along said first and second fixed guide rails respectively, and said slider driving means acting on both said first and second slider members;
movable guide rail means extending in said second direction;
carriage means mounted on said movable guide rail means for movement therealong in said second direction and being able to receive a cassette or cartridge from, and to discharge a cassette or cartridge into a selected one of said storage bins or of said reproducing and/or recording means with which said carriage means is registered; and
carriage driving means including an electric motor for driving said carriage along said movable guide rail means so that, by the combined selective operations of said slider driving means and said carriage driving means, said carriage means can be selectively registered with said selected one of said storage bins and of said reproducing and/or recording means;
characterised in that it further comprises:
connecting means including first and second pivot members pivotally connecting opposite ends of said movable guide rail means to said first and second slider members for movement therewith along said fixed guide rail means and defining respective pivoting axes of the movable guide rail means with respect to the slider means perpendicular to said plane containing said first and second directions; wherein said electric motor is mounted on said first slider member and has a motor shaft defining said first pivot member.

The invention will now be described by way of example with reference to the accompanying drawings, throughout which like parts are referred to by like references, and in which:
Figure 1 is a front elevational view of an embodiment of video cassette auto-changer in accordance with the present invention;
Figure 2 is a top plan view of the auto-changer;
Figure 3 is a side elevational view of the auto-changer;
Figure 4 is an enlarged, exploded perspective view of a mechanism for movably supporting the upper end of a vertical guide rail of the auto-changer;
Figure 5 is an enlarged, fragmentary front elevational view of the upper end portion of the vertical guide rail and of the mechanism for movably mounting it on a fixed upper guide rail of the auto-changer;

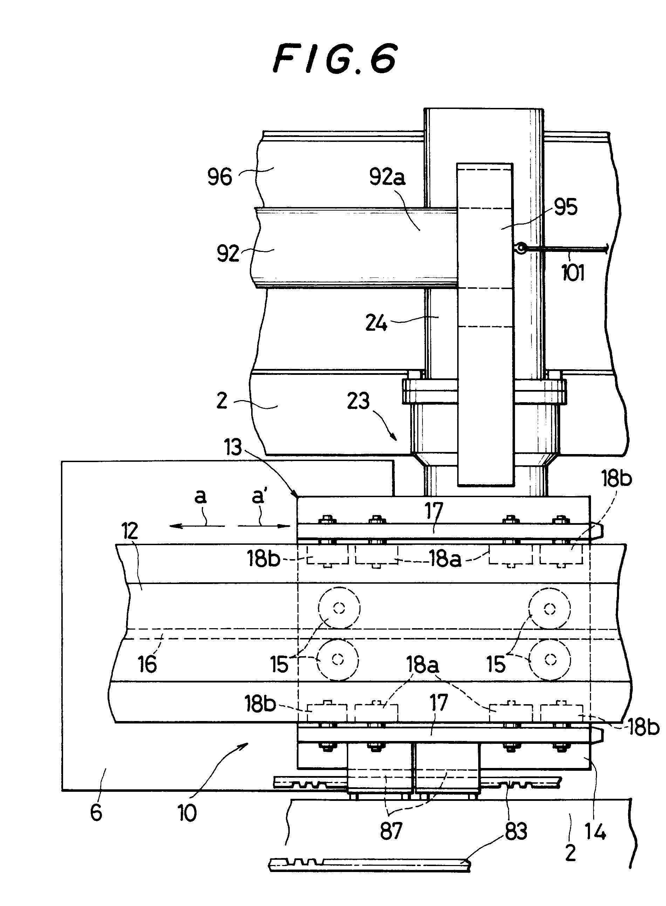

Figure 6 is a fragmentary top plan view of the mechanism of Figure 5;
Figure 7 is a sectional view taken along the line VII-VII of Figure 5;
Figure 8 is a sectional view taken along the line VIII-VIII of Figure 7;
Figure 9 is an enlarged perspective view of a mechanism for mounting the lower end portion of the vertical guide rail with respect to a lower fixed guide rail in the auto-changer;
Figure 10 is a fragmentary front elevational view of the mechanism of Figure 9;
Figure 11 is a sectional view taken along the line XI-XI of Figure 10;
Figure 12 is an exploded perspective view showing details of the vertical guide rail and of the mechanism for movably mounting a carriage thereon in the auto-changer;
Figure 13 is an enlarged sectional view taken along the line XIII-XIII of Figure 5;
Figure 14 is a perspective view of a mechanism in the auto-changer for taking-up the slack in an elongated, flexible electrical connecting member through which electrical control and/or drive signals are transmitted during movements of a cassette transporting device over large horizontal distances;
Figures 15A and 15B are diagrammatic views illustrating the mechanism of Figure 14 in two different extreme positions thereof:
Figure 16 is a fragmentary perspective view of a mechanism in the auto-changer for taking-up slack in an elongated flexible electrical connecting member through which electrical control signals are supplied to the carriage while permitting vertical movements of the carriage on the vertical guide rail; and
Figures 17A and 17B are diagrammatic side elevational views representing the mechanism of Figure 16 in two different extreme positions thereof.

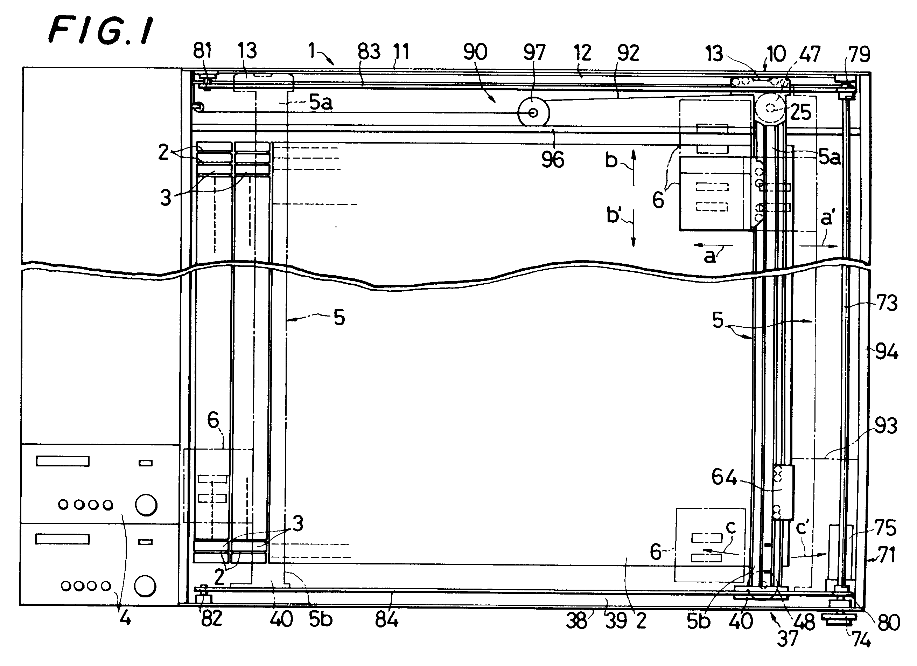

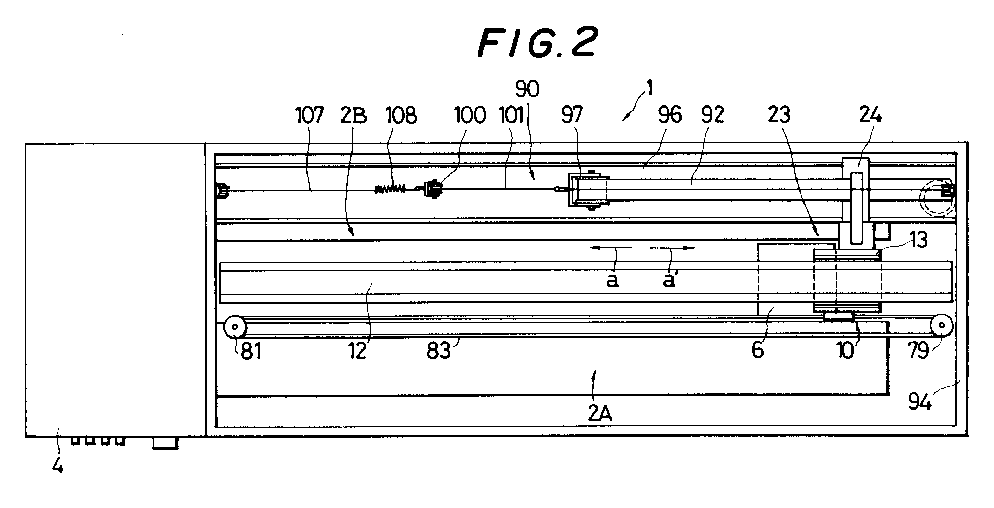

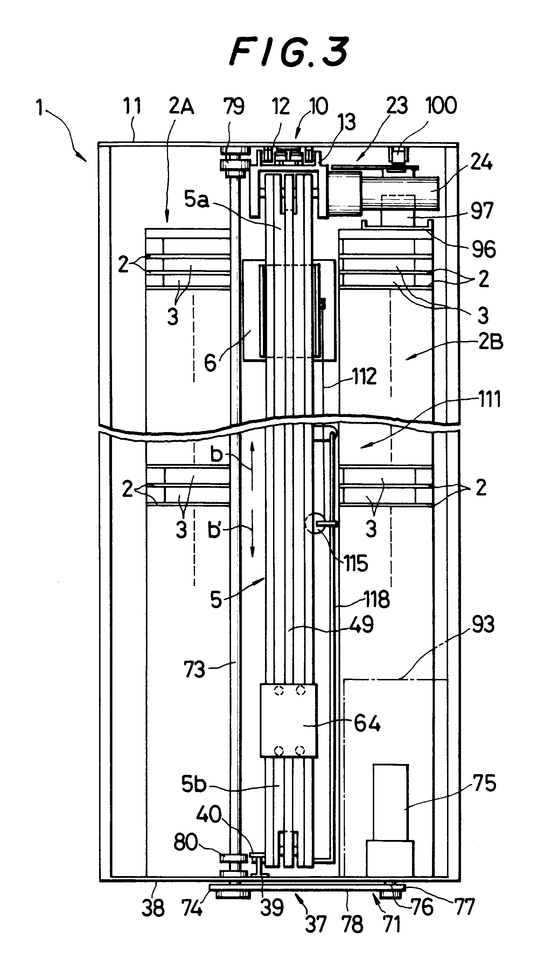

Referring initially to Figures 1 to 3, the embodiment of video cassette auto-changer comprises an upright, rectangular housing 1 having a large number of cassette storage bins 2 arrayed therein in orthogonally related directions, that is, in vertical stacks which are arranged horizontally in succession, and which are each arranged to store a video tape cassette 3 therein. As is apparent from Figures 2 and 3, the stacks of storage bins 2 are arranged in front and rear banks 2A and 2B that are spaced apart to define an aisle therebetween. A plurality of reproducing and/or recording devices, such as, VTRs 4, are stacked vertically one above the other at one side of the housing 1, and are of a so-called side-loading type, so as to be each capable of receiving a cassette 3 at the side of the respective VTR 4 facing the aisle between the banks 2A and 2B of storage bins 2. A movable guide rail 5 extends vertically in the aisle between the front and rear banks 2A and 2B of storage bins 2 and is movable horizontally in the directions of the arrows a and a' in Figure 1, as hereinafter described in detail. A cassette feeder or carriage 6 is mounted on the guide rail 5 for movements vertically therealong in the directions indicated by the arrows b and b' in Figure 1, as hereinafter described in detail.

In operation of the auto-changer, a selected cassette 3 is removed by the carriage 6 from a respective storage bin 2, whereupon the carriage 6 is moved horizontally in the direction of the arrow a and vertically in the direction of the arrow b or b' so as to register with the side-loading port or opening of a selected one of the VTRs 4, and the transported cassette 3 is then transferred from the carriage 6 into the selected VTR 4 for reproducing or recording a signal on the tape in the cassette 3. After the desired recording or reproducing operation has been performed in the selected VTR 4, the used cassette 3 is removed by the carriage 6 which is then moved horizontally in the direction of the arrow a' and vertically in the direction of the arrow b or b' for registering the carriage 6 with the storage bin 2 into which the used cassette 3 is to be returned. Then, the returned cassette 3 is transferred from the carriage 6 to the storage bin 2 with which it is registered.

A supporting structure 10 for the upper end portion 5a of the guide rail 5 includes a substantially horizontal top plate 11 of the housing 1 to the underside of which there is suitably secured a substantially horizontal upper guide rail 12, and an upper slider mechanism 13 mounted on the upper guide rail 12 for movements therealong in the directions of the arrows a and a'.

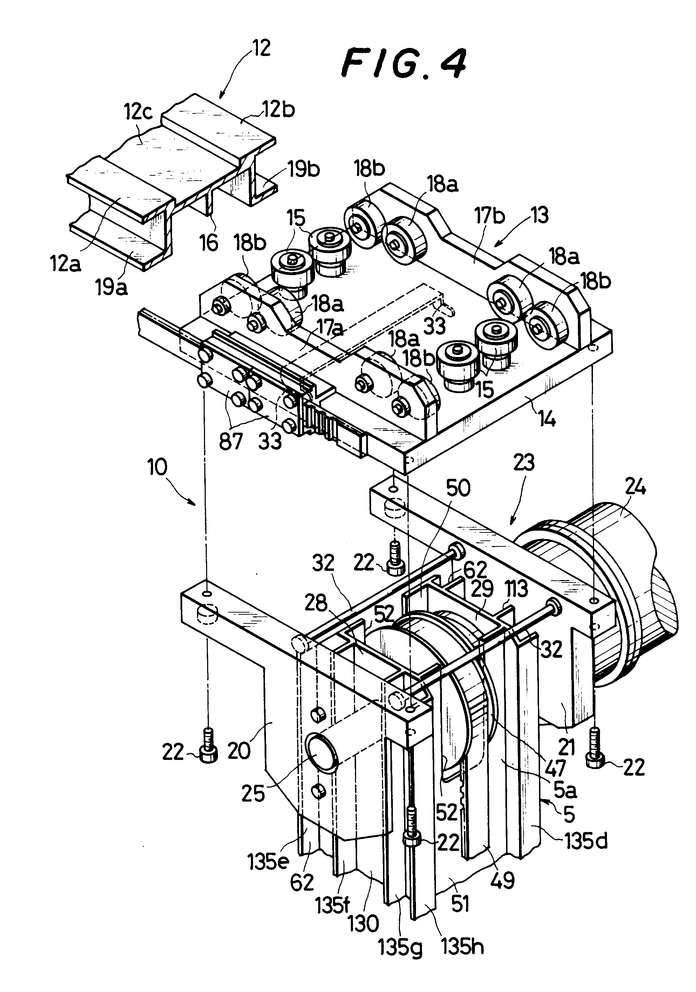

The upper guide rail 12 is shown, particularly in Figure 2, to be disposed above the aisle between the front and rear banks 2A and 2B of storage bins 2. As shown in Figure 4, the upper guide rail 12 comprises two oppositely facing C-shaped sections 12a and 12b connected by a horizontal web 12c from which a central flange 16 depends.

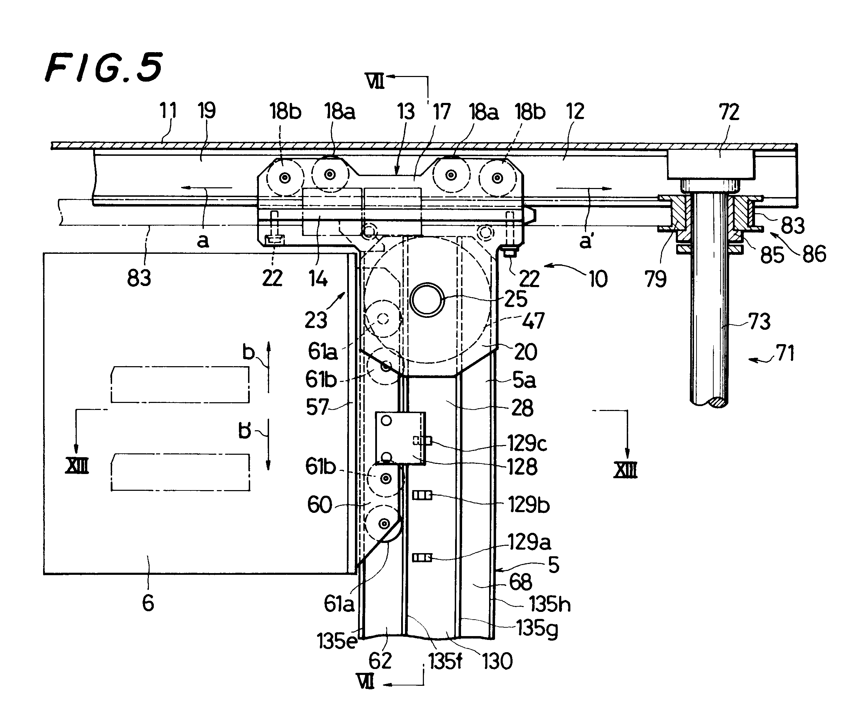

The slider mechanism 13 includes a horizontal plate 14 with flanges 17a and 17b directed upwardly along the front and rear portions of the plate 14. Front and rear guide rollers 15 are mounted on the opposite side portions of the plate 14 midway between the flanges 17a and 17b for rotation about respective vertical axes and are positioned for close rolling engagement with the opposite side surfaces of the flange 16 of the guide rail 12. Two inner guide rollers 18a and two outer guide rollers 18b are mounted at the rearwardly facing side of the flange 17a and at the forwardly facing side of the flange 17b, and are rotatable about respective horizontal axes. The rollers 18a and 18b on the flange 17a extend into a forwardly opening horizontal guide groove 19a defined by the section 12a of the guide rail 12, while the rollers 18a and 18b mounted on the flange 17b similarly extend into a rearwardly opening horizontal guide groove 19b defined by the section 12b of the guide rail 12. As shown particularly in Figure 5, the axes of the inner rollers 18a are disposed slightly higher than the axes of the outer rollers 18b, with the result that the guide rollers 18a are in rolling contact with the downwardly facing upper surfaces of the respective guide grooves 19a and 19b, while the guide rollers 18b are in rolling contact with the upwardly facing lower surfaces of the respective guide grooves 19a and 19b. By reason of the foregoing, the slider mechanism 13 is smoothly guided by the rollers 15, 18a and 18b for movements along the upper guide rail 12 in the horizontal directions indicated by the arrows a and a'.

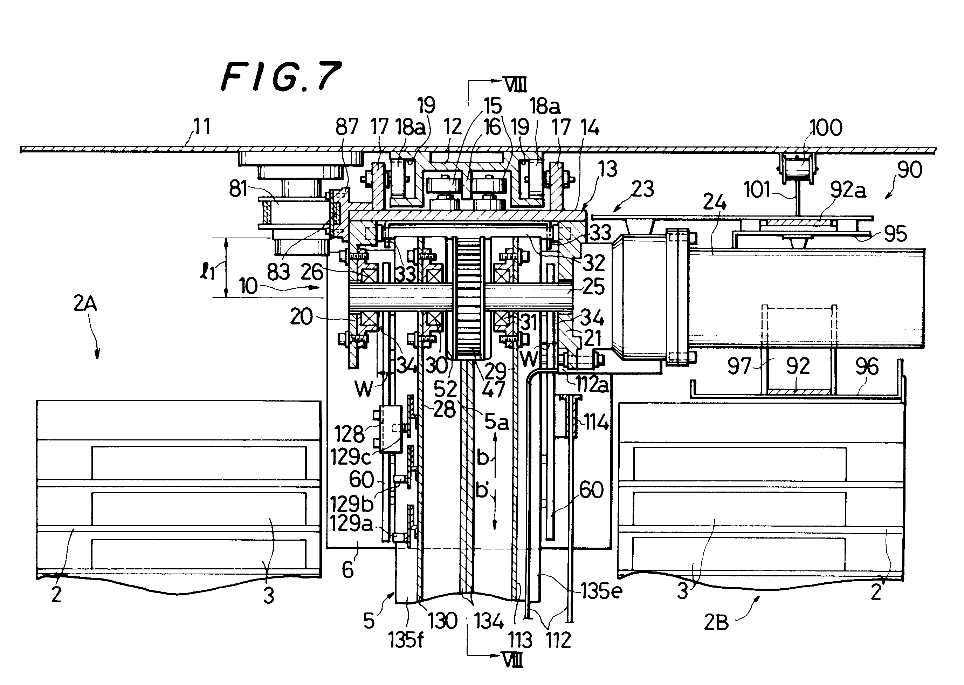

Front and rear support plates 20 and 21 (Figures 4 and 7) depend from the front and back edge portions of the horizontal plate 14 and are fixed thereto by bolts 22. A vertical drive mechanism 23 which will be described in detail hereinafter generally comprises a geared motor 24 fixed to the back surface of the support plate 21 and having a drive shaft 25 which extends through the support plate 21 and is supported at its forward end in a bearing 26 (Figure 7) carried by the support plate 20.

A pair of bearings 30 and 31 (Figure 7), which may be in the form of ball bearings, are fixed to the upper end portion 5a of the guide rail 5 at the inner side surfaces of front and rear walls 28 and 29 of a box-like structure forming the vertical guide rail 5. The driving shaft 25 is inserted in the bearings 30 and 31 with the result that the upper end portion 5a of the guide rail 5 is pivotally suspended from the driving shaft 25, and hence is mounted on the slider mechanism 13 for movements with the latter along the horizontal upper guide rail 12 and for pivotal movements relative to the slider mechanism 13 about the axis of the drive shaft 25. As shown in Figure 7, spaces or clearances 34 having a width w are provided between the upper end portion 5a of the guide rail 5 and the support plates 20 and 21, respectively.

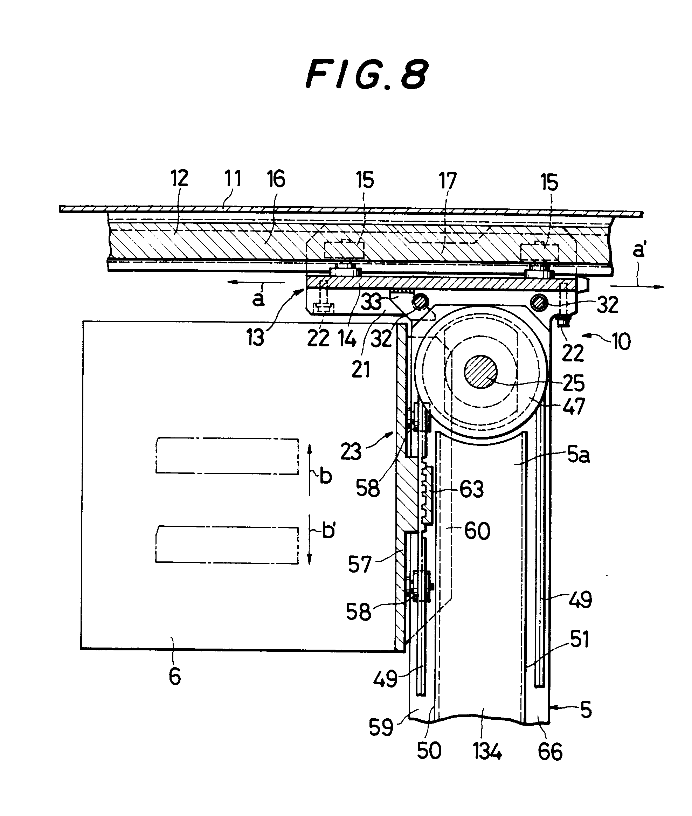

In order to facilitate the suspension of the guide rail 5 from the slider mechanism 13, the upper end portion 5a of the guide rail 12 is initially mounted on the drive shaft 25 at a time when the support plates 20 and 21 are disconnected from the horizontal plate 14, as shown in Figure 4. At such time, the support plates 20 and 21 can be secured to each other by a pair of left and right connecting rods 32. Thereafter, one of the connecting rods 32 is engaged with a hook bracket 33 secured to the undersurface of the horizontal plate 14, as shown in Figure 8, for temporarily suspending the guide rail 5 from the slider mechanism 13 until the bolts 22 can be installed for securing the support plates 20 and 21 to the horizontal plate 14.

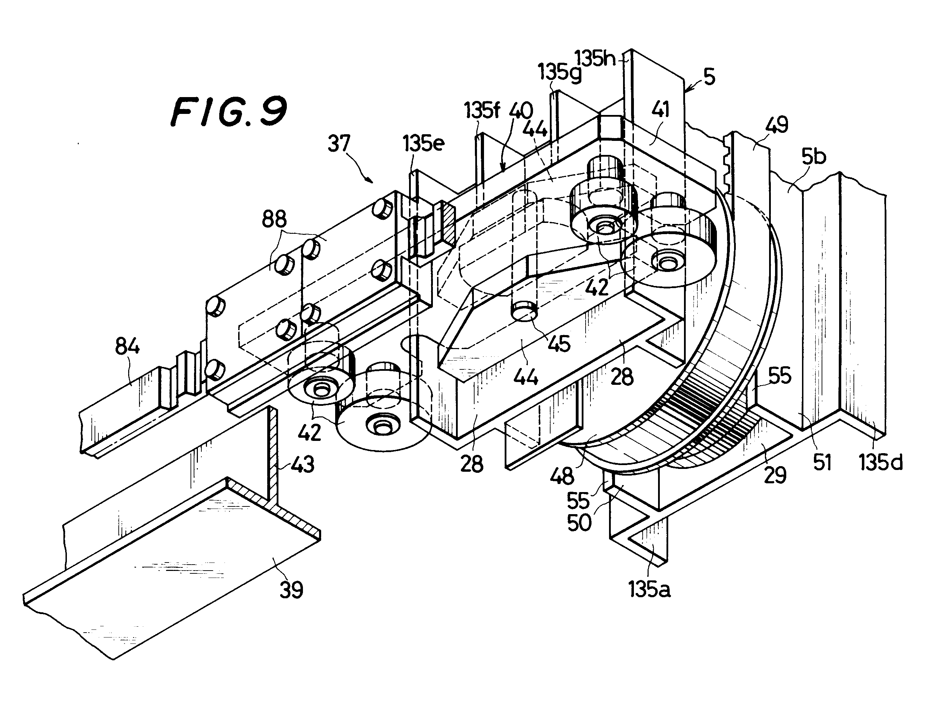

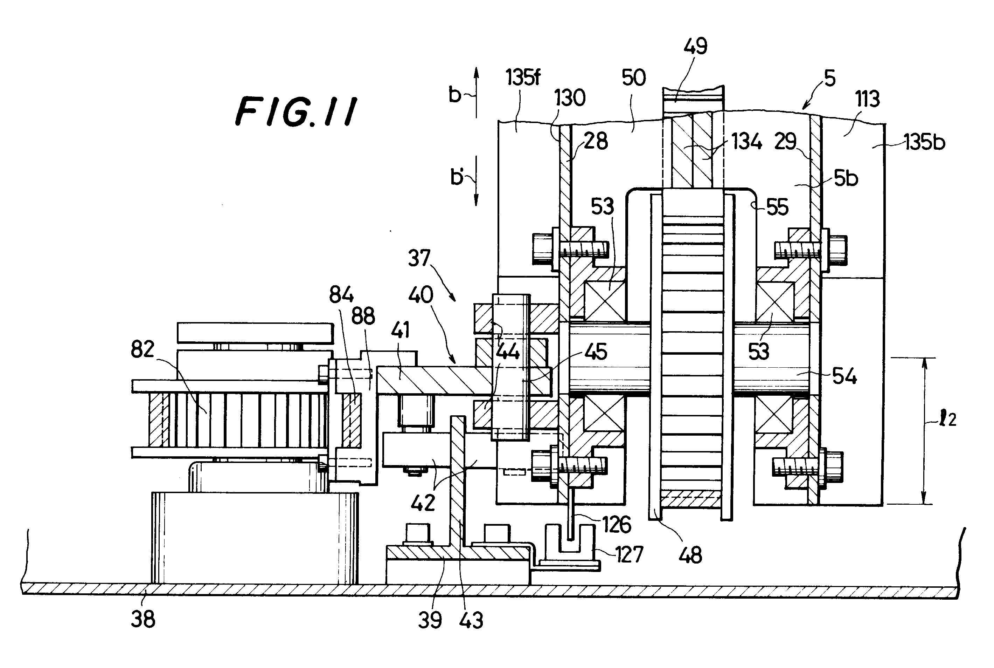

Returning to Figures 1 and 3, it will be seen that a support mechanism 37 for a lower end portion 5b of the guide rail 5 generally comprises a bottom plate 38 extending along the housing 1, a horizontal lower guide rail 39 fixed to the upper surface of the bottom plate 38 under the aisle between the banks 2A and 2B of the storage bins 2, and a lower slider mechanism 40 movable along the guide rail 39 in the directions of the arrows a and a'. As shown particularly in Figures 9 and 11, the horizontal lower guide rail 39 is preferably of inverted T-shaped cross-section so as to define a vertical, upwardly directed rib 43 extending along the guide rail 39 and being received between two pairs of front and rear guide rollers 42 depending from a horizontal plate 41 of the slider mechanism 40 at laterally spaced-apart positions and being rotatable about respective vertical axes. The guide rollers 42 guide the slider mechanism 40 along the guide rail 39 while permitting vertical movements of the slider mechanism 40 relative to the guide rail 39.

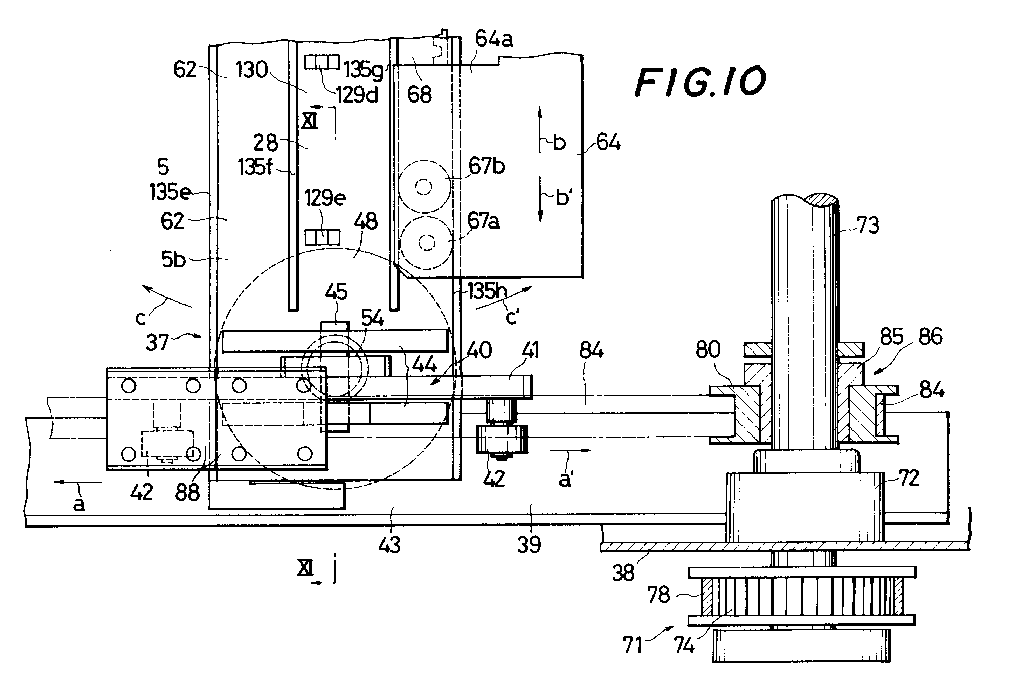

As shown in Figures 9 to 11, a pair of vertically spaced flange members 44 are directed forwardly from the front wall 28 of the guide rail 5 at the lower end portion 5b. The horizontal plate 41 of the slider mechanism 40 extends rearwardly between the flange members 44 and is pivotally connected to the latter by a vertical pivot pin 45. Therefore, the lower slider mechanism 40, in moving along the guide rail 39, is free to be angularly displaced about the vertical axis of the pin 45 relative to the guide rail 5 for accommodating any deviations of the upwardly directed rib 43 of the guide rail 39 from a plane parallel to the plane of the flange 16 of the upper guide rail 12. Furthermore, since the slider mechanism 40 is free to be displaced vertically with respect to the lower guide rail 39, the guide rail 5 is swingable about the horizontal axis of the drive shaft 25 from which it is suspended, at the upper end, in which case the lower end portion 5b of the guide rail 5 is displaceable in the directions indicated by the arrows c and c' in Figure 10.

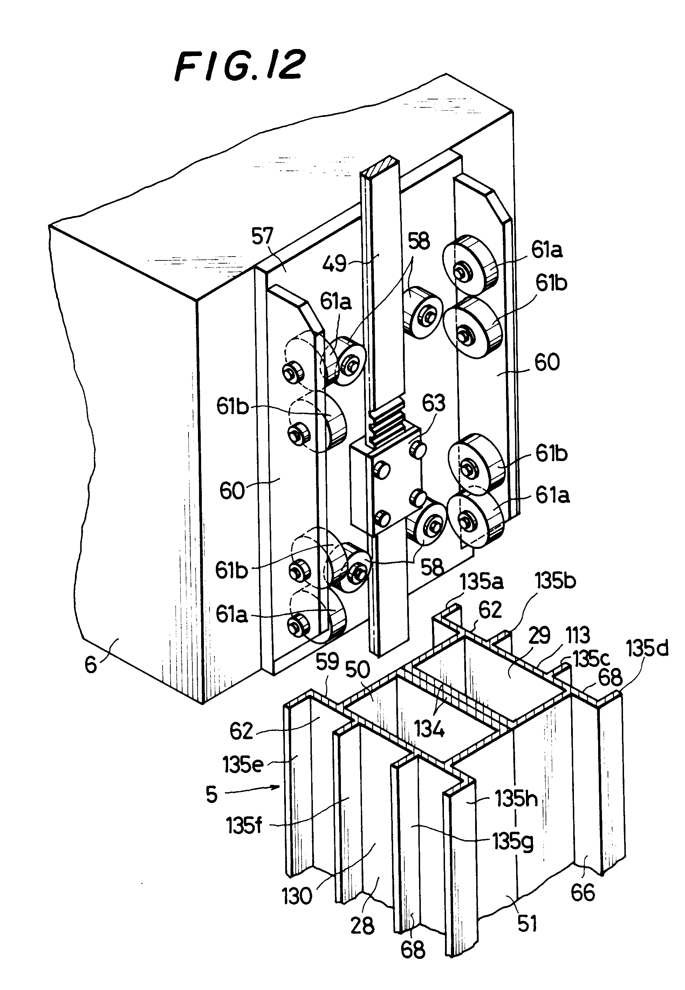

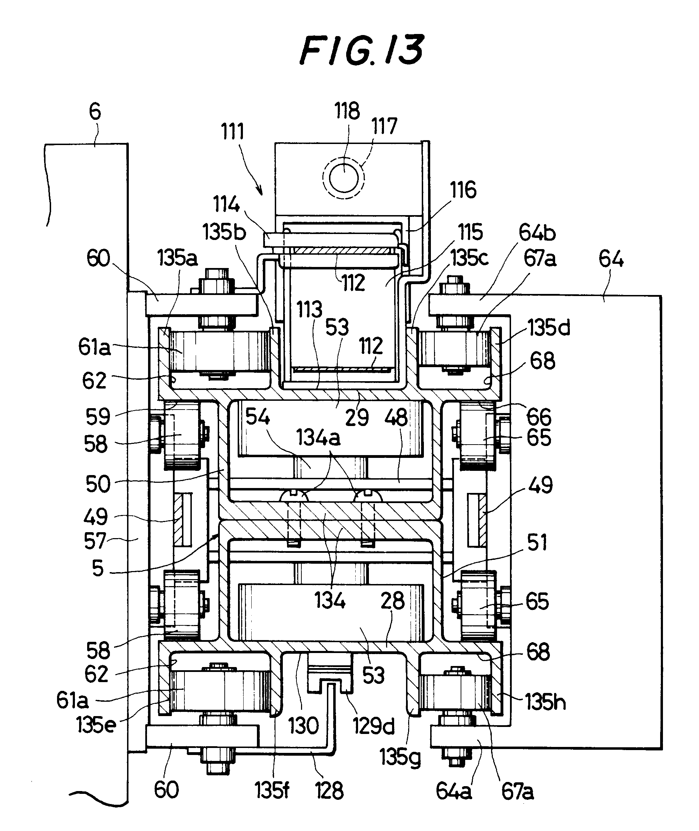

As shown particularly in Figures 12 and 13, a mounting plate 57 is fixed to the side surface of the carriage 6 facing away from the stack of VTRs 4, and upper and lower pairs of guide rollers 58 are mounted on the plate 57 for rotation about respective horizontal axes and are engageable in a guide groove 59 extending vertically along the adjacent side of the guide rail 5. For convenience in fabricating and assembling the guide rail 5 with the carriage 6, the box-like structure of the guide rail 5 is shown to be formed in two portions having rectangular sections and being secured together at abutting walls 134 by screws 134a (Figure 13) so as to define the previously mentioned front and rear walls 28 and 29 and side walls 50 and 51 extending therebetween. Side portions of the front and rear walls 28 and 29 are shown to extend laterally beyond the side walls 50 and 51, so as to define the guide grooves 59 by means of the outer surface of the side wall 50 and the confronting or inwardly directed surfaces of the projecting side portions of the front and rear walls 28 and 29. A similar guide groove 66 is provided at the opposite side of the guide rail 5 by the outer surface of the side wall 51 and the confronting or inwardly directed surfaces at the respective projecting side portions of the front and rear walls 28 and 29. Spaced apart vertical ribs 135a, 135b, 135c and 135d extend rearwardly from the rear wall 29, and spaced apart vertical ribs 135e, 135f, 135g and 135h extend forwardly from the front wall 28. Guide grooves 62 are defined between the ribs 135a and 135b, and the ribs 135e and 135f, respectively. Flanges 60 extend laterally from the forward and rearward edge portions of the mounting plates 57, and pairs of guide rollers 61a and 61b are mounted at the inner surfaces of the flanges 60 at upper and lower position, respectively, for rotation about horizontal axes. The guide rollers 61a and 61b extend into the guide grooves 62 and, as shown particularly in Figure 5, the axes of the guide rollers 61a are offset laterally with respect to the axes of the guide rollers 61b. Thus, the guide rollers 61a are in rolling contact with the rib 135a at one side of the guide rail 5 and with the rib 135e at the opposite side of the guide rail 5, while the guide rollers 61b are in rolling contact with the rib 135b or the rib 135f. Therefore, the mounting plate 57 and the carriage 6 thereon can be smoothly moved along the guide rail 5 with displacements relative to the latter only in the vertical direction, that is, the direction along the longitudinal axis of the guide rail 5.

As shown in Figures 10 and 13, a counterweight 64 is mounted on the guide rail 5 at the side thereof remote from the carriage 6. Upper and lower, and front and rear guide rollers 65 are mounted on the counterweight 64 for rotation about horizontal axes and are positioned to extend into the vertical guide groove 66 defined by the side wall 51 of the guide rail 5 and by the edge portions of the front and rear walls 28 and 29 projecting beyond the side wall 51 and with which the guide rollers 65 are in rolling contact. The counterweight 64 has front and rear flanges 64a and 64b extending therefrom past the ribs 135h and 135d, respectively, of the guide rail 5 (Figure 13). Upper and lower pairs of guide rollers 67a and 67b (Figures 10 and 13) extend from the flanges 64a and 64b into guide grooves 68 defined between the ribs 135g and 135h, and between the ribs 135c and 135d, respectively. As shown in Figure 10, the horizontal axes of rotation of the guide rollers 67a are offset laterally a small distance relative to the horizontal axes of rotation of the guide rollers 67b, so that the guide rollers 67a effect rolling contact with the rib at one side of the guide groove 68, for example, the rib 135h in Figure 10, while the guide rollers 67b effect rolling contact with the rib 135g at the opposite side of the respective guide groove 68. Thus, the counterweight 64 is also mounted for smooth movements in the directions of the arrows b and bʹ along the guide rail 5.

The vertical drive mechanism 23 is provided to effect the controlled vertical movements of the carriage 6 in the direction of the arrows b and bʹ along the guide rail 5. As shown particularly in Figures 4 and 7, the vertical drive mechanism 23 includes, in addition to the previously mentioned motor 24, a toothed driving pulley 47 fixed to the motor shaft 25 and located in a generally U-shaped cut-out 52 formed in the side walls 50 and 51 at the upper end portion 5a of the guide rail 5. As shown particularly in FIgure 11, bearings 53, which may be in the form of ball bearings, are fixed to the inner sides of the front and rear walls 28 and 29 of the guide rail 5 at the lower end thereof, and a driven shaft 54 is rotatably mounted in the bearings 53. A toothed driven pulley 48 is fixed on the driven shaft 54 and is accommodated in a U-shaped cut-out 55 formed in the lower portions of the side walls 50 and 51 of the guide rail 5. A timing belt 49 extends around the pulleys 47 and 48, and runs of the belt 49 between the pulleys 47 and 48 are disposed centrally in the grooves 59 and 66, respectively, of the guide rail 5. The run of the timing belt 49 in the guide groove 59 is secured by a clamp 63 to the mounting plate 57 of the carriage 6, and the counterweight 64 is similarly secured to the run of the timing belt 49 in the guide groove 66.

A horizontal drive mechanism 71 is provided to effect movements of the guide rail 5 in the horizontal directions of the arrows a and aʹ. As shown in Figures 5 and 10, the horizontal drive mechanism 71 includes a vertical shaft 73 rotatably mounted, at its upper and lower ends, in bearings 72 fixed to the top and bottom plates 11 and 38 of the housing 1 adjacent to the side thereof remote from the stacked VTRs 4. A toothed driven pulley 74 is fixed to the lower end of the shaft 73 and is engaged by a timing belt 78 which extends around a toothed driving pulley 77 fixed on a driving shaft 76 of a drive motor 75 mounted on the bottom plate 38 (Figure 3). A pair of upper and lower toothed driving pulleys 79 and 80 are mounted on upper and lower portions of the shaft 73. Upper and lower toothed driven pulleys 81 and 82 (Figures 1 and 2) are mounted on the top and bottom plates 11 and 38 for rotation about vertical axes adjacent to the side of the housing 1 near the stack of VTRs 4. An upper timing belt 83 runs around the driving pulley 79 and the driven pulley 81, and a lower timing belt 84 runs around the driving pulley 80 and the driven pulley 82. The driving pulleys 79 and 80 are adjustably secured to the shaft 73 by releasable friction couplings 85 which form upper and lower drive synchronizing means 86. In other words, the rotational positions of the upper and lower driving pulleys 79 and 80 can be adjusted relative to each other for a purpose hereinafter described in detail.

As shown in Figures 7 and 11, a belt clamp 87 secures a run of the upper timing belt 83 to the horizontal plate 14 of the upper slider mechanism 13, and a belt clamp 88 similarly secures a run of the lower timing belt 84 to the horizontal plate 41 of the lower slider mechanism 40.

The operations of the horizontal drive mechanism 71 and the vertical drive mechanism 23 in effecting selected horizontal and vertical movements of the carriage 6 will now be described.

Upon forward or reverse rotation of the drive motor 75, the shaft 73 is suitably driven through the toothed pulleys 74 and 77 and the timing belt 78. The upper and lower driving pulleys 79 and 80 are rotated with the shaft 73 with the result that the upper and lower timing belts 83 and 84 are driven for moving the slider mechanisms 13 and 40 in the direction of the arrow a or aʹ along the respective upper and lower guide rails 12 and 39. The vertical guide rail 5, in being connected to the upper and lower slider mechanisms 13 and 40 at the shafts 25 and 45, is similarly moved in the direction of the arrow a or aʹ. The movement of the vertical guide rail 5, and hence of the carriage 6 thereon, in the direction of the arrow a or aʹ may be limited in response to the detection of a shutter plate 126 (Figure 11) depending from the lower end of the guide rail 5 by suitable sensors 127 fixed along the horizontal lower guide rail 39.

Upon the forward or reverse rotation of the drive motor 24, the driving pulley 47 is similarly rotated to drive the timing belt 49 with the result that the carriage 6 secured to a run of timing belt 49 by the clamp 63 is moved vertically along the guide rail 5 in the direction of the arrow b or bʹ. At the same time, the counterweight 64 is moved vertically along the guide rail 5 in the direction opposed to the movement of the carriage 6 and balances the weight thereof. The vertical movements of the carriage 6 along the guide rail 5 may be limited in response to the detection of a shutter plate 128 fixed to one of the flanges 60 on the mounting plate 57 by a plurality of sensors 129a to 129e (Figures 5 and 10) secured to the front wall 28 of the guide rail 5 within a groove 130 defined between the ribs 135f and 135g.

The upper sensors 129a, 129b and 129c arranged in succession on the upper portion of the guide rail 5 (Figure 5) are successively encountered by the shutter plate 128 as the carriage 6 nears the upper limit of its vertical movement. For example, the detection of the shutter 128 by the sensor 129a may signal that deceleration of the upward movement of the carriage 6 is to be commenced, while the detection of the shutter plate 128 by the sensor 129c signals the upper limit of the permissible movement. The intermediate sensor 129b detects the shutter plate 128 for establishing a so-called 'origin' for the vertical movement of the carriage 6, that is, a point at which the positional relationship of the carriage 6 to the several storage bins 2 is predetermined. The lower sensors 129d and 129e (Figure 10) cooperate with the shutter plate 128 for indicating respective positions at which deceleration of the downward movement of the carriage 6 should commence and at which the downward movement of the carriage 6 should cease.

It will be appreciated that, when the described auto-changer is designed to accommodate hundreds of cassettes 3 in the storage bins 2, as is intended, the apparatus becomes rather large, and the carriage 6 has to be moved over large distances in both the vertical and horizontal directions. Thus, the horizontal upper and lower guide rails 12 and 39 and the respective upper and lower plates 11 and 38 of the housing 1 are long and may not be precisely parallel to each other. By reason of the pivotal suspension of the guide rail 5 from the slider mechanism 13 at the shaft 25, even when the guide rail 12 is slightly inclined so as similarly to incline the slider mechanism 13 moving therealong, the guide rail 5 may remain vertical during its movement in the direction of the arrow a or aʹ for ensuring that the carriage 6 will properly register with the storage bins 2 if they remain horizontal. It should be understood that, by rotationally adjusting the upper and lower driving pulleys 79 and 80 relative to each other on the shaft 73, as is possible by reason of the releasable friction couplings 85 which form the drive synchronizing means 86, the guide rail 5 can be made to swing a small distance about the pivoting axis of the shaft 25 in the direction of the arrow c or cʹ in Figure 10 relative to the slider mechanism 13 so as suitably to angle or incline the guide rail 5 for ensuring that the carriage 6 thereon will be properly aligned with the various storage bins 2 in the event that they are not precisely horizontal. Such adjustments for ensuring proper alignment of the carriage 6 with the several storage bins 2 in an apparatus of large size are made possible by the pivotal connection of the vertical guide rail 5 to the upper slider mechanism 13 at the shaft 25, and further by the fact that the lower slider mechanism 40 can move up and down relative to the lower guide rail 39. Thus, inclination of the guide rail 5 from the vertical, or with respect to a perpendicular to the direction along the upper guide rail 12 is not accompanied by longitudinal stressing of the guide rail 5 or by jamming of the slider member 13 on the guide rail 12.

Further, since the shaft 25 of the motor 24 is used for pivotally suspending the guide rail 5 from the slider mechanism 13, the pivotal suspension of the guide rail 5 is simplified, that is, a pivot pin is not required just for that purpose. Moreover, by reason of the clearances 34 between the guide rail 5 and the support plates 20 and 21 of the slider mechanism 13, the vertical flanges 60 extending from the mounting plate 57 of the carriage 6 can extend into the clearances 34 at the upper limit of the vertical movement of the carriage 6, thereby increasing the permissible range of vertical movement of the carriage 6.

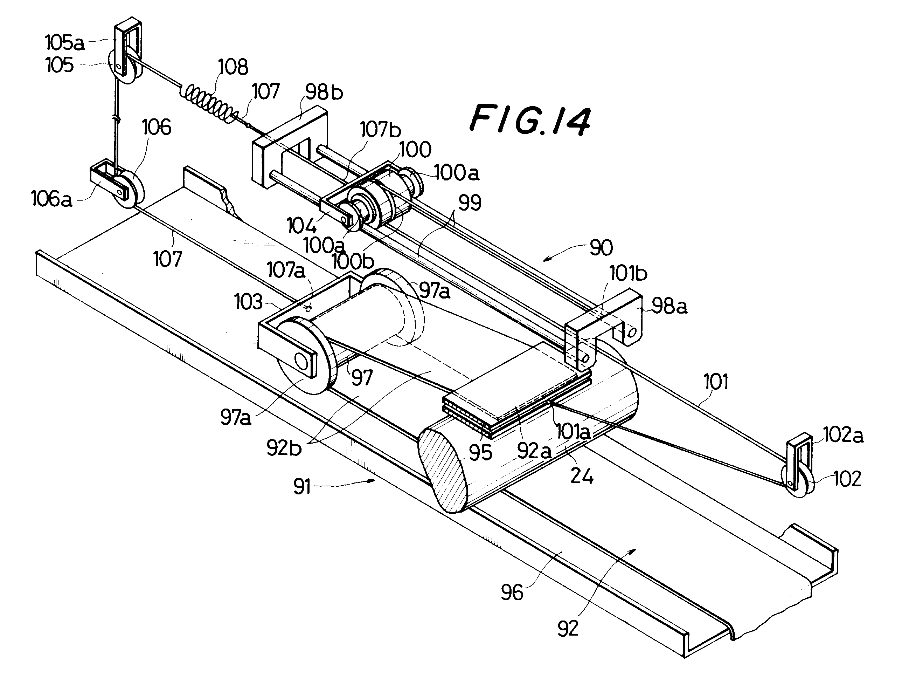

Referring now to Figures 1 to 3, 7 and 14, it will be seen that the auto-changer further comprises a mechanism 90 for avoiding slackness in an elongated flexible electrical connecting member 92, for example, in the form of a flat, flexible electric cable, for supplying electrical control or drive signals to the drive motor 24 of the vertical drive mechanism 23 and to the carriage 6, and which is relatively long for accommodating the large horizontal movements encountered. More particularly, in the embodiment, the electrical member 92 is guided upward along a side plate 94 of the housing 1 from a fixed power source 93 (Figures 1 and 3) located within the lower portion of the housing 1 at the side remote from the stacked VTRs 4. As shown in Figures 7 and 14, a horizontal guide shelf 96 extends laterally above the rear bank 2B of the storage bins 2. After travelling upwardly along the side plate 94 from the power source 93, the electrical member 92 is bent to extend along the shelf 96, with the end 92a of the connecting member 92 remote from the power source 93 being connected to a base or socket 95 provided at the top of the drive motor 24. The length of the electrical member 92 is at least sufficient to permit the full range of the required movements of the motor 24 with the upper slider mechanism 13 along the horizontal guide rail 12. Of course, the vertical guide rail 5 suspended from the slider mechanism 13 and the carriage 6 movable vertically on the vertical guide rail 5 are all movable with the slider mechanism 13 and the motor 24 in the horizontal directions, and, for the sake of convenience, are hereinafter all referred to, in the aggregate, as a movable member 91.

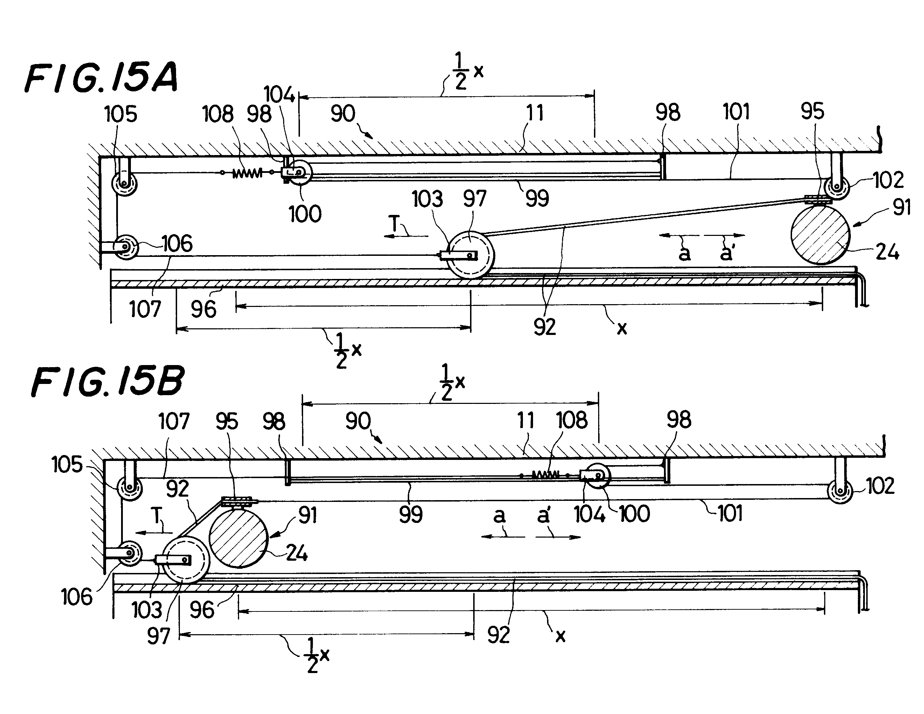

As shown particularly in Figures 14, 15A and 15B, the electrical member 92 extending along the shelf 96 is turned upwardly and around a first movable roller 97 which has enlarged end flanges 97a in rolling contact with the shelf 96. It will be seen that portions 92b of the electrical member 92 extending to and from the roller 97 form a bight in the electrical member 92. A pair of parallel guide rods 99 are disposed above the shelf 96 and are supported, at their opposite ends in brackets 98 depending from the top plate 11 of the housing 1 so as to extend parallel to the direction of the horizontal rolling movements of the roller 97 on the shelf 96. A second movable roller 100 has circumferential grooves 100a in its opposite end portions which receive the guide rods 99 so that the roller 100 can move by rolling along the guide rods 99 in a path perpendicular to the axis of the roller 100, and more particularly in a horizontal path parallel to the path of movement of the roller 97 on the shelf 96. A first elongated, flexible mechanical connection, for example, in the form of a wire 101, is connected at one end 101a to the base 95 on the motor 24, and hence to the upper slider mechanism 13, while the other end 101b of the wire 101 is connected to the base 95 around a pulley 102 rotatable in a suitably fixed bracket 102a, and then the wire 101 extends around the roller 100 in a guide groove 100b at the middle thereof, prior to being anchored at the end 101b in the bracket 98a. A second elongated, flexible mechanical connection, for example, in the form of a wire 107, extends between the first and second movable rollers 97 and 100. More specifically, as shown, one end 107a of the wire 107 is connected to a yoke 103 in which the roller 97 is rotatably mounted, while the other end 107b of the wire 107 is connected to a yoke 104 in which the roller 100 is rotatably mounted. Further, intermedite its ends, the wire 107 extends around guide pulleys 105 and 106 that are rotatable in suitably mounted fixed brackets 105a and 106a, respectively. A tension spring 108 is interposed in the wire 107 and is initially stressed to exert a biasing force by which the movable rollers 97 and 100 are urged along the shelf 96 and the guide rods 99, respectively, in the direction of the arrow a in Figures 15A and 15B. The bight of the electrical member 92 is thus pulled by the roller 97 in the direction of the arrow a, thereby to avoid slack in the electrical member 92. Due to the mechanical connection provided by the wire 101 extending from the movable member 91, that is, the upper slider mechanism 13 and the components movable therewith, around the fixed roller 102 and then the movable roller 100 to the fixed anchor at the end 101b, when the movable member 91 is moved laterally in the direction of the arrow a or aʹ, the second movable roller 100 is moved laterally in the opposite direction, that is, in the direction of the arrow aʹ or the arrow a, respectively.

It will be seen that, when the movable member 91 is moved by the horizontal drive mechanism 71 through a distance x in the direction of the arrow a, for example, from the position shown in Figure 15A to the position shown in Figure 15B, the end 101a of the wire 101 fixed to the movable member 91 is also moved by the distance x. However, since the wire 101 extends around the second movable roller 100, that is, a bight is formed in the wire 101, the roller 100 is only moved through a distance x/2 in the direction of the arrow aʹ. In response to such movement of the roller 100, the wire 107 pulls the roller 97 in the direction of the arrow a through a distance of x/2, for example, from the position shown in Figure 15A to the position shown in Figure 15B.Since the electrical member 92 extends around the roller 97, and thus has a bight formed therein, the movement of the roller 97 in the direction of the arrow a through the distance x/2 is equivalent to the movement of the movable member 91 in the same direction, that is, in the direction of the arrow a, through the distance x. Furthermore, since the rollers 97 and 100 move through the same distances, the spring 108 interposed in the wire 107 between the rollers 97 and 100 maintains a predetermined tension. In other words, regardless of the position of the movable member 91, a predetermined tension T is maintained in the electrical member 92 as a result of the spring 108 and slack in the electrical member 92 is avoided. Even if the distance over which the movable member 91 is to be moved in the horizontal direction is very large, the total space required for accommodating the electrical member 92 and the mechanism 90 for avoiding slack therein is minimized by the fact that the rollers 97 and 100 are moved through distances that are only half the distances through which the movable member 91 is moved. Further, since a predetermined tension T is always maintained in the electrical member 92, the response of the latter to movements of the movable member 91 is immediate and precise.

The electrical member 92 extending from the fixed source 93 to the base 95 on the motor 24 is, of course, suitable for transmitting electrical driving and control signals for the motor 24, and also for the carriage 6. However, since the carriage 6 is movable vertically on the guide rail 5, an additional flexible electrical connecting member 112, for example, in the form of a flexible, flat cable, is required for further transmitting those electrical driving and control signals required for the operations of the carriage 6. As shown particularly in Figure 7, the electrical member 112 extends from a terminal or connecting block 112a at the lower portion of the motor 24 and extends vertically downward in a guide groove 113 defined between the vertical ribs 135b and 135c projecting from the rear wall 29 of the guide rail 5. The end portion of the electrical member 112 remote from the connecting block 112a is engaged with a suitable terminal or connecting block 114 on the carriage 6. The length of the electrical member 112 is, of course, sufficient to accommodate the full range of the possible movements of the carriage 6 vertically along the guide rail 5. Since such movements of the carriage 6 along the guide rail 5 may be relatively large, the auto-changer further comprises a mechanism 111 for avoiding slackness in the electrical member 112 required for accommodating such movements while supplying electrical control or driving signals from the connecting block 112a at the motor 24 to the connecting block 114 at the carriage 6.

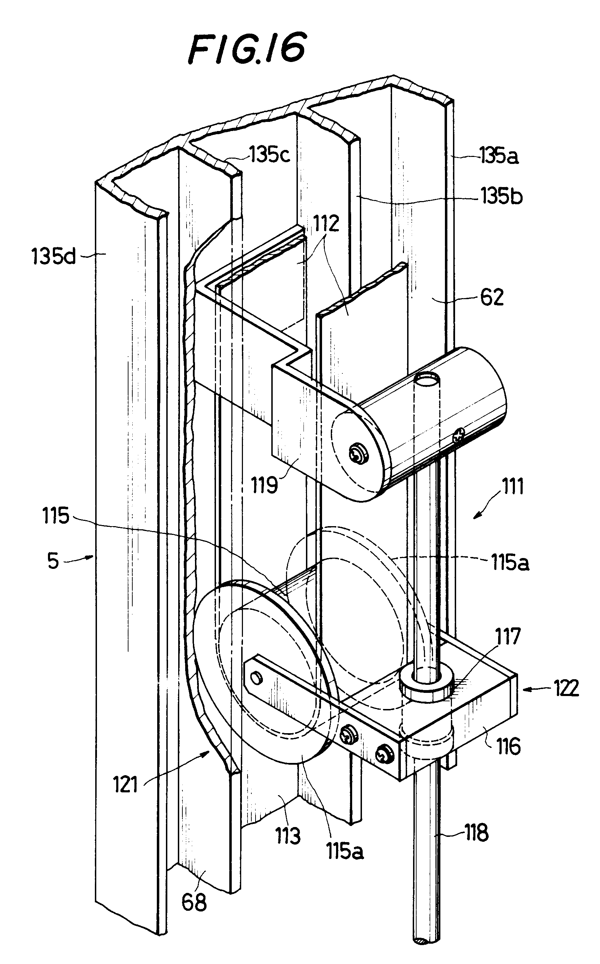

As shown in Figure 16, the mechanism 111 includes a roller 115 under which the electrical member 112 is looped, and having flanges 115a at its opposite ends which extend into and are guided along the vertical guide groove 113 in the guide rail 5. Thus, the guide groove 113 forms a first guide means 121 for the roller 115. A second guide means 122 for the roller 115 is formed by a yoke 116 having the roller 115 rotatably mounted therein and containing a linear bearing 117 slidably receiving a vertical guide rod 118. The upper end of the guide rod 118 is secured in a support bracket 119 fixed to the guide rail 5 approximately midway between the upper and lower ends thereof. The lower end of the guide rod 118 is supported in a bracket 120 fixed to the lower end portion of the guide rail 5. Therefore, the roller 115 is free to move vertically along the lower half of the guide rail 5 while the weight W of the roller 115 acts in the bight of the electrical member 112 for avoiding slack therein. During vertical movements of the roller 115, lateral displacements thereof are prevented by the engagement of the roller 115 in the groove 113 at the back of the guide rail 5, while forward and rearward displacements of the roller 115 are prevented by the engagement of the guide rod 118 in the linear bearing 117.

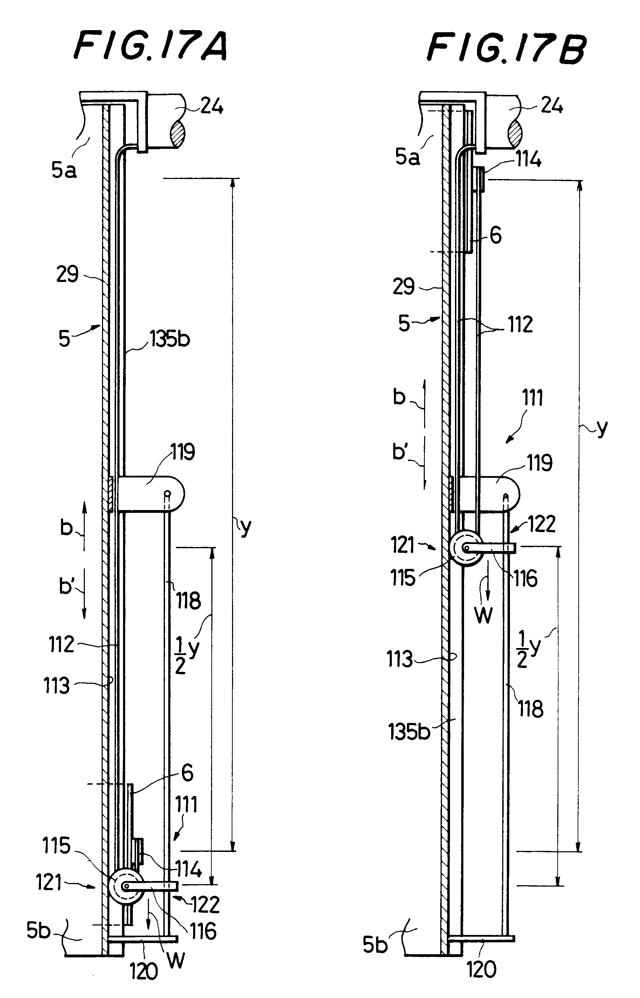

As shown in Figures 17A and 17B, when the carriage 6 is moved vertically in the direction of the arrow bʹ through a distance y, for example, from the position shown in Figure 17B to the position shown in Figure 17A, the movable roller 115 engaging the electrical member 112 moves in the same direction as the arrow bʹ, but through a distance y/2, that is, a distance that is half the displacement of the carriage 6. At all such times, the electrical member 112 is maintained under tension by the weight W of the roller 115 which, as described, moves through relatively small distances for minimizing the space required therefor even when the carriage 6 undergoes large vertical movements. Since the movable roller 115 is closely guided by the vertical guide groove 113 and the vertical guide rod 118 during its vertical movements, the interference of the roller 115 with other structural or operating members of the apparatus is avoided. Thus, for example, the banks 2A and 2B of the storage bins 2 can be located very close to the guide rail 5, as shown in Figure 3.

As earlier noted with reference to Figures 12 and 13, the vertical guide rail 5 is preferably formed in two parts which can each be conveniently extruded from aluminium and then joined by the screws 134a. The various ribs identified previously as defining the guide grooves 59, 62, 66, 68 and 113 for vertically guiding the carriage 6, the counterweight 64, and the roller 115, as well as for defining the groove 130 in which the sensors 129a to 129e are conveniently located, can be conveniently formed during extrusion of the parts of the guide rail 5. Thus, the guide rail 5 is easily formed to serve a number of functions in a compact form.

It is also to be seen that, by reason of the two-part structure of the guide rail 5, the driving pulley 47 and the driven pulley 48 can be disposed within the structure of the guide rail 5 without unduly complicating the assembling. In other words, the upper and lower ends of the guide rail 5 can extend the distances l₁ and 1₂ (Figures 7 and 11) beyond the axes of the shafts 25 and 54, respectively and, as a result thereof, the vertical range of movements of the carriage 6 along the guide rail 5 can be increased for a particular length of the guide rail 5. Further, when the guide rail 5 is extruded of aluminium, a lightweight structure is achieved and, if the guide rollers 58, 61a, 61b, 65, 67a and 67b for the carriage 6 and the counterweight 64 are formed of polyurethane or other suitable synthetic resin or plastics material, substantially noise-free operation can be achieved.

By way of summary, the auto-changer permits movements of the cassette feeder or carriage 6 over large vertical and horizontal distances while ensuring that such movements will be smoothly effected so that jamming is avoided. Moreover, in the course of such large horizontal and vertical movements, the electrical connecting members or cables 92 and 112 for transmitting electrical control and/or driving signals from a fixed source 93 to various movable elements of the apparatus, for example, to the motor 24 and then on to the carriage 6, are maintained under predetermined tensions for avoiding slackness and possible entaglement in other parts of the apparatus.

Although the invention has been specifically described in its application to a video cassette auto-changer, it will be appreciated that the invention can be similarly applied to other devices for feeding or storing different kinds of cassettes or cartridges containing tapes, disc or the like.

## Claims

1. An apparatus for selectively supplying and reproducing cassettes or cartridges (3) and which includes a plurality of reproducing and/or recording means(4), a plurality of cassette or cartridge storage bins (2) arrayed in first and second orthogonally related directions and each able to store a cassette or cartridge (3) therein, and transporting means (6, etc.) for selectively transporting said cassettes or cartridges (3) between said storage bins (2) and between said storage bins (2) and said reproducing and/or recording means (4);
said transporting means (6, etc.) comprising:
fixed guide rail means (12, 39) extending in said first direction;
slider means (13, 40) mounted on said fixed guide rail means (12, 39) for movement therealong in said first direction;
slider driving means (71) for driving said slider means (13, 40) along said fixed guide rail means (12, 39); said fixed guide rail means (12, 39) including first and second parallel, spaced apart fixed guide rails (12, 39) extending in said first direction, said slider means (13, 40) including first and second slider members (13, 40) movable along said first and second fixed guide rails (12, 39), respectively, and said slider driving means (71) acting on both said first and second slider members (13, 40);
movable guide rail means (5) extending in said second direction;
carriage means (6) mounted on said movable guide rail means (5) for movement therealong in said second direction and being able to receive a cassette or cartridge (3) from, and to discharge a cassette or cartridge (3) into a selected one of said storage bins (2) or of said reproducing and/or recording means (4) with which said carriage means (6) is registered; and
carriage driving means (23) including an electric motor (24) for driving said carriage (6) along said movable guide rail means (5) so that, by the combined selective operations of said slider driving means (71) and said carriage driving means (23), said carriage means (6) can be selectively registered with said selected one of said storage bins (2) and of said reproducing and/or recording means (14);
characterised in that it further includes:
connecting means (25, 54) including first and second pivot members (25, 54) pivotally connecting opposite ends of said movable guide rail means (5) to said first and second slider members (13, 40) for movement therewith along said fixed guide rail means (12, 39) and defining respective pivoting axes of the movable guide rail means (5) with respect to said slider means (13, 40) perpendicular to said plane containing said first and second directions; wherein
said electric motor (24) is mounted on said first slider member (13) and has a motor shaft (25) defining said first pivot member (25).

2. Apparatus according to claim 1 wherein said carriage driving means (23) further includes a first pulley (47) rotatably coupled with said motor shaft (25), a second pulley (48) rotatable on said second pivot member (54), and a carriage drive belt (49) running around said first and second pulleys (47, 48) and having a run therebetween secured to said carriage means (6).

3. Apparatus according to claim 2 wherein said slider driving means (71) includes a first pair of pulleys (79, 81) respectively mounted rotatably at opposite ends of said first fixed guide rail (12), a first slider driving belt (83) running around said first pair of pulleys (79, 81) and having a run therebetween secured to said first slider member (13), a second pair of pulleys (80, 82) respectively mounted rotatably at opposite ends of said second fixed guide rail (39), a second slider driving belt (84) running around said second pair of pulleys (80, 82) and having a run therebetween secured to said second slider member (40), a drive shaft (73) extending between said first and second fixed guide rails (12, 39) at one end of said fixed guide rails (12, 39), means coupling said drive shaft (73) to the pulleys (79, 80) of said first and second pairs of pulleys (79, 81; 80, 82) located at said one end of the fixed guide rails (12, 39), and electric motor means (75) for driving said drive shaft (73).

4. Apparatus according to claim 3 wherein said first and second fixed guide rails (12, 39) extend substantially horizontally and are vertically spaced apart with said movable guide rail means (5) extending substantially vertically therebetween.

5. Apparatus according to claim 4 wherein said first fixed guide rail (12) is at the upper end of said movable guide rail means (5), said first fixed guide rail (12) and first slider member (13) have cooperating means (15, 16, 18, 19) limiting relative movements thereof in the vertical direction and in a direction transverse to said first direction, and said second fixed guide rail (39) and second slider member (40) have cooperating means (42, 43) limiting relative movements thereof in said direction transverse to said first direction while permitting relative vertical movements.

6. Apparatus according to claim 5 wherein the means (85) rotatably coupling said drive shaft (73) to said pulleys (79, 80) of the first and second pairs of pulleys (79, 81; 80, 82) at said one end of the fixed guide rails (12, 39) includes means (86) for individually adjusting said pulleys (79, 80) at said one end of the fixed guide rails (12, 39) rotationally with respect to said drive shaft (73) for accommodating inclination from the vertical by said movable guide rail means (5).

7. Apparatus according to claim 1 wherein said first and second fixed guide rails (12, 39) extend substantially horizontally and are vertically spaced apart with said movable guide rail means (5) extending substantially vertically therebetween.

8. Apparatus according to claim 7 wherein said first guide rail (12) is at the upper end of said movable guide rail means (5), said first fixed guide rail (12) and first slider member (13) have cooperating means (15, 16, 18, 19) limiting relative movements thereof in the vertical direction and in a direction transverse to said first direction, and said second fixed guide rail (39) and second slider member (49) have cooperating means (42, 43) limiting relative movements thereof in said direction transverse to said first direction while permitting relative vertical movements.

9. Apparatus according to claim 1 wherein said carriage driving means (23) includes motor means (24) mounted on said slider means (13); and further comprising an elongated, flexible electrical connecting member (92) extending from a fixed source (93)of electrical control signals to said motor means (24) and being of a length to permit movement of said motor means (24) with said slider means (13) in said first direction along said fixed guide rail means (12), first movable roller means (97) around which said electrical connecting member (92) extends to form a bight (92b) therein, means (103) mounting said first movable roller means (97) for movements in said first direction, second movable roller means (100) mounted for reciprocal movements in a path perpendicular to the axis of said second roller means (100), a first elongated, flexible mechanical connection (101) connected at one end to said slider means (13) and at its other end to a stationary anchor (98a), said first mechanical connection (101) extending around said second movable roller means (100) for moving it in said path in response to movements of said slider means (13) in said first direction, and a second elongated, flexible mechanical connection (107) extending between said first and second movable roller means (97, 100) for moving said first roller means (97) in said first direction in response to movements of said second roller means (100) in said path so as to avoid slackness in said bight (92b) of said electrical connecting member (92).

10. Apparatus according to claim 9 wherein a tension spring (108) is interposed in said second mechanical connection (101) for maintaining a predetermined tension in said electrical connecting member (92).

11. Apparatus according to claim 8 wherein said path of movement of said second roller means (100) is parallel to said first direction and a bight is also formed in said first mechanical connection (101) in extending around said second roller means (100) so that, upon movement of said slider means (13) in said first direction, said first and second roller means (97, 100) are each moved in said first direction through one-half of said movement of the slider means (13) for avoiding said slackness of said electrical connecting member (92).

12. Apparatus according to claim 9 wherein said fixed guide rail means (12, 39) includes horizontally extending upper and lower fixed guide rails (12, 39) which are vertically spaced apart, said slider means (13, 40) includes upper and lower slider members (13, 40) movable along said upper and lower fixed guide rails (12, 39), respectively, and said movable guide rail means (5) extends vertically between said upper and lower slider members (13, 40); and further comprising a second elongated flexible electrical connecting member(112) extending from said upper slider member (13) to said carriage means (6) for supplying electrical control signals to said carriage means (6) and having a length sufficient to accommodate said movement of said carriage means (6) along said movable guide rail means (5), a third movable roller means (115) under which said second electrical connecting member (112) extends for forming a bight therein, and means (121, 122) guiding said third movable roller means (115) for movements along said movable guide rail means (5) under the influence of gravity so that the weight of said third movable roller means (115) acts to take up slack in said second electrical connecting member (112).

13. Apparatus according to claim 1 wherein said fixed guide rail means (12, 39) includes horizontally extending upper and lower fixed guide rails (12, 39) which are vertically spaced apart, said slider means (13, 40) includes upper and lower slider members (13, 40) movable along said upper and lower fixed guide rails (12, 39), respectively, and said movable guide rail means (5) extends vertically between said upper and lower slider members (13, 40); and further comprising an elongated flexible electrical connecting member (112) extending from said upper slider member (13) to said carriage means (6) for supplying electrical control signals to said carriage means (6) and having a length sufficient to accommodate said movement of said carriage means (6) along said movable guide rail means (5), a movable roller means (115) under which said electrical connecting member (112) extends for forming a bight therein, and means (113, 118) guiding said movable roller means (115) for movements along said movable guide rail means (5) under the influence of gravity so that the weight of said movable roller means (115) acts to take up slack in said electrical connecting member (112).

## Patentansprüche

1. Vorrichtung zum selektiven Liefern und Wiedergeben von Kassetten oder Patronen (3), die eine Vielzahl von Wiedergabe- und/oder Aufzeichnungsmitteln (4) umfaßt, weiterhin eine Vielzahl von Aufbewahrungsbehältern (2) für Kassetten und Patronen, die in einer ersten und einer dazu zweiten orthogonalen Richtung aufgereiht sind und die in der Lage sind, jeweils eine Kassette oder Patrone (3) darin zu speichern, und Transportmittel (6, usw.) zum selektiven Transport der Kassetten oder Patronen (3) zwischen den Aufbewahrungsbehältern (2) und zwischen den Aufbewahrungsbehältern (2) und den Wiedergabe- und/oder Aufzeichnungsmitteln (4);
wobei die Transportmittel (6, usw.) umfassen:
feste Führungsschienenmittel (12, 39), die sich in der ersten Richtung erstrecken;
Gleitermittel (13, 40), die auf den festen Führungsschienenmitteln (12, 39) für eine Bewegung daran entlang in der ersten Richtung montiert sind;
Gleiterantriebsmittel (71) zum Antrieb der Gleitermittel (13, 40) entlang der festen Führungsschienenmittel (12, 39);
wobei die festen Führungsschienenmittel (12, 39) erste und zweite parallele, von einander beabstandete feste Führungsschienen (12, 39) aufweisen, die sich in der ersten Richtung erstrecken, wobei die Gleitermittel (13, 40) erste und zweite Gleiterelemente (13, 40) aufweisen, die jeweils entlang der ersten und zweiten Führungsschienen (12, 39) bewegbar sind, und wobei die Gleiterantriebsmittel (71) sowohl auf die ersten als auch auf die zweiten Gleiterelemente (13, 40) einwirken;
bewegbare Führungsschienenmittel (5), die sich in der zweiten Richtung erstrecken;
Beförderungsmittel (6), die auf den bewegbaren Führungsschienenmitteln (5) montiert sind, um sich daran entlang in der zweiten Richtung zu bewegen und die in der Lage sind, eine Kassette oder Patrone (3) aus bzw. eine Kassette oder Patrone (3) in einen der ausgewählten Aufbewahrungsbehälter (2) oder der Wiedergabe- und/oder Aufzeichnungsmittel (4) abzuladen, mit denen die Beförderungsmittel (6) im Register sind; und
Beförderungsantriebsmittel (23), die einen Elektromotor (24) zum Antrieb der Beförderung (6) entlang der bewegbaren Führungsschienenmittel (5) aufweisen, so daß durch den verbundenen selektiven Betrieb der Gleiterantriebsmittel (71) und der Beförderungsantriebsmittel (23) die Beförderungsantriebsmittel (6) selektiv mit einem der ausgewählten Aufbewahrungsbehälter (2) und den Wiedergabe- und/oder Aufzeichnungsmitteln (14) in Register werden können;
**gekennzeichnet dadurch,** daß sie weiter umfaßt: Verbindungsmittel (25, 54), die erste und zweite Drehmittel (25, 54) umfassen, die die gegenüberliegenden Enden der bewegbaren Führungsschienenmittel (5) mit den ersten und zweiten Gleitermitteln (13, 40) drehbar verbinden, um sich damit entlang der festen Führungsschienenmittel (12, 39) zu bewegen und um entsprechende Drehachsen der bewegbaren Führungsschienenmittel (5) in Bezug auf die Gleitermittel (13, 40) senkrecht zu der Ebene festzulegen, die die erste und zweite Richtung enthält; wobei
der Elektromotor (24) auf dem ersten Gleiterelement (13) montiert ist und eine Motorwelle (25) aufweist, die das erste Drehelement (25) bestimmt.

2. Vorrichtung nach Anspruch 1, wobei die Beförderungsantriebsmittel (23) weiterhin eine erste Riemenscheibe (47) umfassen, die drehbar mit der Motorwelle (25) gekoppelt ist, eine zweite Riemenscheibe (48), die auf dem zweiten Drehelement (54) drehbar ist, und einen Beförderungsantriebsriemen (49), der um die erste und zweite Riemenscheibe (47, 48) läuft und der dazwischen einen Laufbereich hat, der an den Beförderungsmitteln (6) gesichert ist.

3. Vorrichtung nach Anspruch 2, wobei die Gleiterantriebsmittel (71) ein erstes Riemenscheibenpaar (79, 81) umfassen, das entsprechend drehbar an gegenüberliegenden Enden der ersten festen Führungsschiene (12) befestigt ist, einen Gleiterantriebsriemen (83), der um das erste Riemenscheibenpaar (79, 81) läuft und der einen Laufbereich dazwischen hat, der am ersten Gleiterelement (13) gesichert ist, ein zweites Riemenscheibenpaar (80, 82), das jeweils drehbar an den gegenüberliegenden Enden der zweiten festen Führungsschiene (39) befestigt ist, einen zweiten Gleiterantriebsriemen (84), der um das zweite Riemenscheibenpaar (80, 82) herumläuft und der dazwischen einen Laufbereich hat, der am zweiten Gleiterelement (40) gesichert ist, eine Antriebswelle (73), die sich zwischen den ersten und zweiten festen Führungsschienen (12,39) an einem Ende der festen Führungsschienen (12, 39) erstreckt, Mittel zum Ankoppeln der Antriebswelle (73) mit den Riemenscheiben (79, 80) des ersten und zweiten Riemenscheibenpaars (79, 81; 80, 82), die an dem einen Ende der festen Führungsschienen (12, 39) angeordnet sind, und Elektromotormittel (75) zum Antrieb der Antriebswelle (73).

4. Vorrichtung nach Anspruch 3, wobei die ersten und zweiten Führungsschienen (12, 39) sich im wesentlichen horizontal erstrecken und gegenüber den bewegbaren Führungsschienenmitteln (5) vertikal beabstandet sind, die sich im wesentlichen vertikal dazwischen erstrecken.

5. Vorrichtung nach Anspruch 4, wobei die erste feste Führungsschiene (12) am oberen Ende der bewegbaren Führungsschienenmittel (5) angeordnet ist, wobei die erste feste Führungsschiene (12) und das erste Gleiterelement (13) zusammenarbeitende Mittel (15, 16, 18, 19) aufweisen, die deren Relativbewegungen in der vertikalen Richtung und in einer Richtung quer zur ersten Richtung begrenzen, und wobei die zweite feste Führungsschiene (39) und ein zweites Gleiterelement (40) zusammenarbeitende Mittel (42, 43) haben, die deren Relativbewegungen in der genannten Richtung begrenzen, die quer zu ersten Richtung ist, während vertikale Relativbewegungen zugelassen werden.

6. Vorrichtung nach Anspruch 5, wobei die Mittel (85), die drehbar die Antriebswelle (73) mit den Riemenscheiben (79, 80) der ersten und zweiten Riemenscheibenpaare (79, 81); 80, 82) an dem einen Ende der festen Führungsschienen (12, 39) verbinden, Mittel (86) zur individuellen Justierung der Riemenscheiben (79, 80) an dem einen Ende der festen Führungsschienen (12, 39) drehend in Bezug auf die Antriebswelle (73) zur Aufnahme der Neigung aus der Vertikalen durch die bewegbaren Führungsschienenmittel (5) umfassen.

7. Vorrichtung nach Anspruch 1, wobei die ersten und zweiten festen Führungsschienen (12, 39) sich im wesentlichen horizontal erstrecken und vertikal von den bewegbaren Führungsschienenmittel 85) beabstandet sind, die sich im wesentlichen vertikal dazwischen erstrecken.

8. Vorrichtung nach Anspruch 7, wobei die erste Führungsschiene (12) am oberen Ende der bewegbaren Führungsschienenmittel (5) angeordnet ist, wobei die erste feste Führungsschiene (12) und das erste Gleiterelement (13) zusammenarbeitende Mittel (15, 16, 18, 19) haben, die deren Relativbewegungen in der vertikalen Richtung und in einer Richtung quer zur ersten Richtung begrenzen, und wobei die zweite Führungsschiene (39) und ein zweites Gleiterelement (49) zusammenarbeitende Mittel (42, 43) haben, die deren Relativbewegung in der Richtung quer zur ersten Richtung begrenzen, während vertikale Relativbewegungen zugelassen werden.

9. Vorrichtung nach Anspruch 1, wobei die Beförderungsantriebsmittel (23) Motormittel (24) umfassen, die auf den Gleitermitteln (13) montiert sind; und weiterhin ein langestrecktes, flexibles elektrisches Verbindungselement (92) aufweisen, das sich von einer festen Quelle (93) für elektrische Steuersignale zu den Motormitteln (24) erstreckt und eine Länge aufweist, um die Bewegung der Motormittel (24) mit den Gleitermitteln (13) in der ersten Richtung entlang der festen Führungsschienenmittel (12) zu erlauben, erste bewegbare Rollenmittel (97), um die sich das elektrische Verbindungselement (92) erstrecken, um darin eine Einbuchtung (92b) zu bilden, Mittel (103), die die ersten bewegbaren Rollenmittel (97) für Bewegungen in der ersten Richtung montieren, zweite bewegbare Rollenmittel (100), die für Auf- und Abbewegungen auf einer Bahn montiert sind, die senkrecht zur Achse der zweiten Rollenmittel (100) ist, eine erste langgestreckte, flexible mechanische Verbindung (101), die an einem Ende mit den Gleitermitteln (13) und an ihrem anderen Ende mit einem stationären Anker (98a) verbunden ist, wobei die erste mechanische Verbindung (101), die sich rund um die zweiten Rollenmittel (100) erstreckt, um sie auf der Bahn in Antwort auf Bewegungen der Gleitermittel (13) in der ersten Richtung zu bewegen, und eine zweite langgestreckte, flexible mechanische Verbindung (107), die sich zwischen den ersten und zweiten bewegbaren Rollenmitteln (97, 100) erstreckt, um die ersten Rollenmittel (97) in der ersten Richtung als Antwort auf die Bewegungen der zweiten Rollenmittel (100) auf der Bahn zu bewegen, um so eine Schlaffheit in der Einbuchtung (92b) des elektrischen Verbindungselements (92) zu vermeiden.

10. Vorrichtung nach Anspruch 9, wobei eine Zugfeder (108) in der zweiten mechanischen Verbindung (101) dazwischen geschaltet ist, um eine vorher bestimmte Vorspannung für das elektrische Verbindungselement (92) aufrecht zu erhalten.

11. Vorrichtung nach Anspruch 8, wobei die Bewegungsbahn der zweiten Rollenmittel (100) parallel zur ersten Richtung ist und in der ersten mechanischen Verbindung (101) weiterhin eine Einbuchtung gebildet ist, die sich rund um die zweite Rollenmittel (100) ausdehnt, so daß aufgrund der Bewegung der Gleitermittel (13) in der ersten Richtung die ersten und zweiten Rollenmittel (97, 100) jeweils in der ersten Richtung über die Hälfte der Bewegung der Gleitermittel (13) bewegt werden, um eine Schlaffheit des elektrischen Verbindungselements (92) zu vermeiden.

12. Vorrichtung nach Anspruch 9, wobei die festen Führungsschienenmittel (12, 39) horizontal sich erstreckende obere und untere feste Führungsschienen (12, 39) aufweisen, die vertikal voneinander beabstandet sind, wobei die Gleitermittel (13, 40) obere und untere Gleiterelemente (13, 40) aufweisen, die jeweils entlang oberer und unterer fester Führungsschienen (12, 39) bewegbar sind, und wobei die beweglichen Führungschienenmittel (5) sich vertikal zwischen den oberen und unteren Gleiterelementen (13, 40) erstrecken; und weiter ein zweites langestrecktes flexibles elektrisches Verbindungselement (112) umfassen, das sich von dem oberen Gleiterelement (13) zu den Beförderungsmittel (6) erstreckt, um elektrische Steuersignale zu den Beförderungsmitteln (6) zu liefern, und das eine Länge hat, die ausreicht, um die Bewegung der Beförderungsmittel (6) entlang der bewegbaren Führungsschienenmittel (5) unterzubringen, dritte bewegbare Rollenmittel (115), unter denen sich das zweite elektrische Verbindungselement (12) erstreckt, um darin eine Einbuchtung zu bilden, und Mittel (121, 122), die die dritten bewegbaren Rollenmittel (115) für Bewegungen entlang der bewegbaren Führungsschienenmittel (5) unter dem Einfluß der Schwerkraft führen, so daß das Gewicht der dritten bewegbaren Rollenmittel (15) bewirkt, eine Schlaffheit in dem zweiten elektrischen Verbindungselement (112) aufzunehmen.

13. Vorrichtung nach Anspruch 1, wobei die festen Führungsschienenmittel (12, 39) horizontal sich erstreckende obere und untere feste Führungsschienen (12, 39) aufweisen, die vertikal voneinander beabstandet sind, wobei die Gleitermittel (13, 40) obere und untere Gleitermittel (13, 40) aufweisen, die jeweils entlang oberer und unterer fester Führungsschienen (12, 39) bewegbar sind, und wobei die bewegbaren Führungsschienenmittel (5) sich vertikal zwischen den oberen und unteren Gleitermitteln (13, 40) erstrecken; und weiter ein langgestrecktes flexibles elektrisches Verbindungselement (112) aufweisen, das sich von den oberen Gleitermitteln (13) zu den Beförderungsmitteln (6) erstreckt, um elektrische Steuersignale zu den Beförderungsmitteln (6) zu liefern, und das eine Länge hat, die ausreichend ist, um die Bewegung der Beförderungsmittel (6) entlang der bewegbaren Führungsschienenmittel (5) aufzunehmen, bewegbare Rollenmittel (115), unter denen das elektrische Verbindungselement (112) sich erstreckt, um darin eine Einbuchtung zu bilden, und Mittel (113, 118), die die bewegbaren Rollenmittel (115) für Bewegungen entlang der bewegbaren Führungsschienenmittel (5) unter dem Einfluß der Schwerkraft führen, so daß das Gewicht der bewegbaren Rollenmittel (115) dahingehend wirkt, eine Schlaffheit im elektrischen Verbindungselement (112) aufzunehmen.

## Revendications

1. Appareil destiné à amener et reproduire de manière sélective des cassettes ou cartouches (3) et qui comprend plusieurs moyens de reproduction et/ou d'enregistrement (4), plusieurs bacs de stockage de cassette ou de cartouche (2) disposés en rangée dans des première et deuxième directions liées orthogonalement et capables chacun de stocker une cassette ou cartouche (3), et des moyens de transport (6, etc.) destinés à transporter de manière sélective lesdites cassettes ou cartouches (3) entre lesdits bacs de stockage (2) et entre lesdits bacs de stockage (2) et lesdits moyens de reproduction et/ou d'enregistrement (4); lesdits moyens de transport (6, etc.) comportant :
des moyens formant rail de guidage fixe (12, 39) s'étendant dans ladite première direction;
des moyens formant élément coulissant (13, 40) montés sur lesdits moyens formant rail de guidage fixe (12, 39) pour déplacement le long de ceux-ci dans ladite première direction;
des moyens d'entraînement d'élément coulissant (71) destinés à entraîner lesdits moyens formant élément coulissant (13, 40) le long desdits moyens formant rail de guidage fixe (12, 39); lesdits moyens formant rail de guidage fixe (12, 39) comprenant des premier et deuxième rails de guidage fixes parallèles espacés (12, 39) s'étendant dans ladite première direction, lesdits moyens formant élément coulissant (13, 40) comprenant des premiers et deuxièmes éléments coulissants (13, 40) mobiles le long desdits premiers et deuxièmes rails de guidage fixes (12, 39) respectivement, et lesdits moyens d'entraînement d'élément coulissant (71) agissant sur lesdits premiers et deuxièmes éléments coulissants (13, 40);
des moyens formant rail de guidage mobile (5) s'étendant dans ladite deuxième direction;
des moyens formant chariot (6) montés sur lesdits moyens formant rail de guidage mobile (5) pour déplacement le long de ceux-ci dans ladite deuxième direction et qui sont capables de recevoir une cassette ou cartouche (3) de, et de décharger une cassette ou cartouche (3) dans l'un choisi desdits bacs de stockage (2) ou desdits moyens de reproduction et/ou d'enregistrement (4) avec lequel lesdits moyens formant chariot (6) sont en alignement; et
des moyens d'entraînement de chariot (23) comprenant un moteur électrique (24) destiné à entraîner ledit chariot (6) le long desdits moyens formant rail de guidage mobile (5) de telle sorte que, par les opérations sélectives combinées desdits moyens d'entraînement d'élément coulissant (71) et desdits moyens d'entraînement de chariot (23), lesdits moyens formant chariot (6) peuvent être amenés sélectivement en alignement avec celui choisi desdits bacs de stockage (2) et desdits moyens de reproduction et/ou d'enregistrement (4);
caractérisé en ce qu'il comporte en outre :
des moyens de liaison (25, 54) comprenant des premiers et deuxièmes éléments de pivot (25, 54) reliant de façon pivotante des extrémités opposées desdits moyens formant rail de guidage mobile (5) aux dits premiers et deuxièmes éléments coulissants (13, 40) pour déplacement le long desdits moyens formant rail de guidage fixe (12, 39) et définissant des axes de pivotement respectifs des moyens formant rail de guidage mobile (5) par rapport aux dits moyens formant élément coulissant (13, 40) perpendiculaires audit plan contenant lesdites premières et deuxièmes directions;
ledit moteur électrique (24) étant monté sur ledit premier élément coulissant (13) et possédant un arbre de moteur (25) définissant ledit premier élément de pivot (25).

2. Appareil selon la revendication 1, dans lequel lesdits moyens d'entraînement de chariot (23) comportent en outre une première poulie (47) reliée de façon rotative audit arbre de moteur (25), une deuxième poulie (48) pouvant tourner sur ledit deuxième élément de pivot (54), et une courroie d'entraînement de chariot (49) s'étendant autour desdites première et deuxième poulies (47, 48) et ayant un brin entre elles fixé aux dits moyens formant chariot (6).

3. Appareil selon la revendication 2, dans lequel lesdits moyens d'entraînement d'élément coulissant (71) comprennent une première paire de poulies (79, 81) montée respectivement de façon rotative au niveau des extrémités opposées dudit premier rail de guidage fixe (12), une première courroie d'entraînement d'élément coulissant (83) s'étendant autour de ladite première paire de poulies (79, 81) et ayant un brin entre elles fixé audit premier élément coulissant (13), une deuxième paire de poulies (80, 82) montée de manière respective de façon rotative au niveau des extrémités opposées dudit deuxième rail de guidage fixe (39), une deuxième courroie d'entraînement d'élément coulissant (84) s'étendant autour de ladite deuxième paire de poulies (80, 82) et ayant un brin entre elles fixé audit deuxième élément coulissant (40), un arbre d'entraînement (73) s'étendant entre lesdits premier et deuxième rails de guidage fixes (12, 39) à une extrémité desdits rails de guidage fixes (12, 39), des moyens reliant ledit arbre d'entraînement (73) aux poulies (79, 80) desdites première et deuxième paires de poulies (79, 81; 80, 82) disposés à une extrémité des rails de guidage fixes (12, 39), et des moyens moteurs électriques (75) destinés à entraîner ledit arbre d'entraînement (73).

4. Appareil selon la revendication 3, dans lequel lesdits premier et deuxième rails de guidage fixes (12, 39) s'étendent sensiblement horizontalement et sont espacés verticalement desdits moyens formant rail de guidage mobile (5) s'étendant sensiblement verticalement en eux.

5. Appareil selon la revendication 4, dans lequel ledit premier rail de guidage fixe (12) se trouve au niveau de l'extrémité supérieure desdits moyens formant rail de guidage mobile (5), ledit premier rail de guidage fixe (12) et ledit premier élément coulissant (13) possèdent des moyens qui coopèrent (15, 16, 18, 19) limitant des mouvements relatifs de ceux-ci dans la direction verticale et dans une direction transversale à ladite première direction, et ledit deuxième rail de guidage fixe (39) et ledit deuxième élément coulissant (40) possèdent des moyens qui coopèrent (42, 43) limitant des mouvements relatifs de ceux-ci dans ladite direction transversale à ladite première direction tout en permettant des mouvements verticaux relatifs.

6. Appareil selon la revendication 5, dans lequel les moyens (85) reliant de façon rotative ledit arbre d'entraînement (73) aux dites poulies (79, 80) des première et deuxième paires de poulies (79, 80; 80, 82) au niveau de ladite première extrémité des rails de guidage fixes (12, 39) comprennent des moyens (86) destinés à ajuster individuellement lesdites poulies (79, 80) au niveau de ladite première extrémité des rails de guidage fixes (12, 39) de façon rotative par rapport audit arbre d'entraînement (73) afin d'accepter une inclinaison par rapport à la verticale desdits moyens formant rail de guidage mobile (5).

7. Appareil selon la revendication 1, dans lequel lesdits premier et deuxième rails de guidage fixes (12, 39) s'étendent sensiblement horizontalement et sont espacés verticalement desdits moyens formant rail de guidage mobile (5) s'étendant sensiblement verticalement entre eux.

8. Appareil selon la revendication 7, dans lequel ledit premier rail de guidage fixe (12) se trouve au niveau de l'extrémité supérieure desdits moyens formant rail de guidage mobile (5), ledit premier rail de guidage fixe (12) et ledit premier élément coulissant (13) possèdent des moyens qui coopèrent (15, 16, 18, 19) limitant des mouvements relatifs de ceux-ci dans la direction verticale et dans une direction transversale à ladite première direction, et ledit deuxième rail de guidage fixe (39) et ledit deuxième élément coulissant (49) possèdent des moyens qui coopèrent (42, 43) limitant des mouvements relatifs de ceux-ci dans ladite direction transversale à ladite première direction tout en permettant des mouvements verticaux relatifs.

9. Appareil selon la revendication 1, dans lequel lesdits moyens d'entraînement de chariot (23) comportent des moyens moteurs (24) montés sur lesdits moyens formant élément coulissant (13); et comportant en outre un élément de liaison électrique flexible allongé (92) s'étendant depuis une source fixe (93) de signaux de commande électriques jusqu'aux dits moyens moteurs (24) et étant d'une longueur destinée à permettre le déplacement desdits moyens moteurs (24) avec lesdits moyens formant élément coulissant (13) dans ladite première direction le long desdits moyens formant rail de guidage fixe (12), des premiers moyens formant galet mobile (97) autour desquels ledit élément de liaison électrique (92) s'étend afin de former un coude (92b), des moyens (103) supportant lesdits premiers moyens formant galet mobile (97) pour les déplacements dans ladite première direction, des deuxièmes moyens formant galet mobile (100) montés pour des déplacements alternatifs le long d'une trajectoire perpendiculaire à l'axe desdits deuxièmes moyens formant galet (100), un premier élément de liaison mécanique flexible allongé (101) relié à une extrémité aux dits moyens formant élément (13) et à son autre extrémité à un ancrage fixe (98a), ledit premier élément de liaison mécanique (101) s'étendant autour desdits deuxièmes moyens formant galet mobile (100) afin de les déplacer le long de ladite trajectoire en réponse aux déplacements desdits moyens formant élément coulissant (13) dans ladite première direction, et un deuxième élément de liaison mécanique flexible allongé (107) s'étendant entre lesdits premiers et deuxièmes moyens formant galet mobile (97, 100) afin de déplacer lesdits premiers moyens formant galet (97) dans ladite première direction en réponse à des déplacements desdits deuxièmes moyens formant galet (100) le long de ladite trajectoire afin d'éviter un jeu dans ledit coude (92b) dudit élément de liaison électrique (92).

10. Appareil selon la revendication 9, dans lequel un ressort de traction (108) est interposé entre ledit deuxième élément de liaison mécanique (101) afin de maintenir une tension prédéterminée dans ledit élément de liaison électrique (92).

11. Appareil selon la revendication 8, dans lequel ladite trajectoire de déplacement desdits deuxièmes moyens formant galet (100) est parallèle à ladite première direction et un coude est également formé dans ledit premier élément de liaison mécanique (101) en s'étendant autour desdits deuxièmes moyens formant galet (100) de telle sorte que, lors du déplacement desdits moyens formant élément coulissant (13) dans ladite première direction, lesdits premiers et deuxièmes moyens formant galet (97, 100) sont déplacés chacun dans ladite première direction de la moitié dudit déplacement des moyens formant élément coulissant (13) afin d'éviter ledit jeu dudit élément de liaison électrique (92).

12. Appareil selon la revendication 9, dans lequel lesdits moyens formant rail de guidage fixe (12, 39) comprennent des rails de guidage fixes supérieur et inférieur (12, 39) qui sont verticalement espacés, lesdits moyens formant élément coulissant (13, 40) comprennent des éléments coulissants supérieur et inférieur (13, 40) mobiles le long desdits rails de guidage fixe supérieur et inférieur (12, 39), et lesdits moyens formant rail de guidage mobile (5) s'étendent verticalement entre lesdits éléments coulissants supérieur et inférieur (13, 40); et comportant en outre un deuxième élément de liaison électrique flexible allongé (112) s'étendant depuis ledit élément coulissant supérieur (13) jusqu'aux dits moyens formant chariot (6) afin d'amener des signaux de commande électriques jusqu'aux dits moyens formant chariot (6) et ayant une longueur suffisante pour accepter ledit déplacement desdits moyens formant chariot (6) le long desdits moyens formant rail de guidage mobile (5), des troisièmes moyens formant galet mobile (115) sous lesquels s'étend ledit deuxième élément de liaison électrique (112) en formant un coude, et des moyens (121, 122) guidant lesdits troisièmes moyens formant galet mobile (115) pour des déplacements le long desdits moyens formant rail de guidage mobile (5) sous l'influence de la gravité de telle sorte que le poids desdits troisièmes moyens formant galet mobile (115) agit afin de rattraper le jeu dans ledit deuxième élément de liaison électrique (112).

13. Appareil selon la revendication 1, dans lequel lesdits moyens formant rail de guidage fixe (12, 39) comprennent des rails de guidage fixes supérieur et inférieur (12, 39) qui sont verticalement espacés, lesdits moyens formant élément coulissant (13, 40) comprennent des éléments coulissants supérieur et inférieur (13, 40) mobiles le long desdits rails de guidage fixe supérieur et inférieur (12, 39), et lesdits moyens formant rail de guidage mobile (5) s'étendent verticalement entre lesdits éléments coulissants supérieur et inférieur (13, 40); et comportant en outre un élément de liaison électrique flexible allongé (112) s'étendant depuis ledit élément coulissant supérieur (13) jusqu'aux dits moyens formant chariot (6) afin d'amener des signaux de commande électriques jusqu'aux dits moyens formant chariot (6) et ayant une longueur suffisante pour accepter ledit déplacement desdits moyens formant chariot (6) le long desdits moyens formant rail de guidage mobile (5), des moyens formant galet mobile (115) sous lesquels s'étend ledit élément de liaison électrique (112) en formant un coude, et des moyens (113, 118) guidant lesdits moyens formant galet mobile (115) pour des déplacements le long desdits moyens formant rail de guidage mobile (5) sous l'influence de la gravité de telle sorte que le poids desdits moyens formant galet mobile (115) agit afin de rattraper le jeu dans ledit élément de liaison électrique (112).
